# EUROPÄISCHE PATENTSCHRIFT

(11) **EP 3 254 893 B1**
(45) Veröffentlichungstag und Bekanntmachung des Hinweises auf die Patenterteilung: **05.05.2021**
(21) Anmeldenummer: 17163920.6
(22) Anmeldetag: 30.03.2017
(51) Int. Cl.: B60P 3/00

(54) **ZUSTELLFAHRZEUG UND VERFAHREN ZUR ZUSTELLUNG VON SENDUNGEN AN UNTERSCHIEDLICHEN ORTEN EINER ZUSTELLROUTE**
DELIVERY VEHICLE AND METHOD FOR DELIVERING MAIL ITEMS TO DIFFERENT LOCATIONS ALONG A DELIVERY ROUTE
VÉHICULE DE LIVRAISON ET PROCÉDÉ DE LIVRAISON D'ENVOIS À DIFFÉRENTS ENDROITS LE LONG D'UN ITINÉRAIRE

(30) Priorität: 08.06.2016 DE 102016110567
(43) Veröffentlichungstag der Anmeldung: 13.12.2017
(73) Patentinhaber: Deutsche Post AG, 53113 Bonn (DE)
(72) Erfinder: Bischoff, Heike, 51143 Köln (DE); Drees, Sandra, 53639 Königswinter (DE); Trendafilov, Boris, 53757 Sankt Augustin (DE); Schneebeck, Holger, 50968 Köln (DE); Huber, Antje, 53115 Bonn (DE)
(74) Vertreter: Cohausz & Florack

(56) Entgegenhaltungen:
- EP-A1- 0 484 673
- DE-A1-102010 030 776
- DE-A1-102014 106 689
- US-A1- 2005 131 645
- US-B1- 6 711 459

## Beschreibung

### Gebiet

Die Erfindung betrifft ein Zustellfahrzeug zur Zustellung von Sendungen an unterschiedlichen Orten einer Zustellroute. Ferner betrifft die Erfindung ein Verfahren zum Zustellen von Sendungen an unterschiedlichen Orten entlang einer Zustellroute mit einem entsprechenden Zustellfahrzeug.

### Hintergrund

Zum Abliefern von Sendung an unterschiedlichen Orten entlang einer Zustellroute werden unterschiedliche Zustellfahrzeuge eingesetzt. Die Zustellfahrzeuge fahren unterschiedliche Zustelltouren, wobei jeder Zustelltour eine andere Zustellroute zugrunde liegen kann. Die Art der Zustellfahrzeuge hängt dabei auch von der Art der Sendungen ab, die entlang der Zustellroute abgeliefert bzw. zugestellt werden sollen. Die Zustellroute führt dabei in der Regel über den öffentlichen Straßenverkehr. Es handelt sich also bevorzugt nicht um den sogenannten Werksverkehr, also den Gütertransport innerhalb eines Werks und/oder Unternehmens. Hierzu werden typischerweise ganz spezielle Zustellfahrzeuge eingesetzt, die nicht für den Transport über längere Strecken und regelmäßig auch nicht für sehr unterschiedliche Sendungen geeignet sind.

Vorliegend werden unter Sendungen grundsätzlich unterschiedliche Gegenstände verstanden, die vorzugsweise mit überschaubarem Aufwand transportiert werden können. Insbesondere können die Sendungen als Stückgut oder Packstücke vorliegen. Dabei kommen Gegenstände des täglichen Bedarfs, wie Verbrauchsmaterialien oder Lebensmittel ebenso in Frage wie technische Gegenstände und Gerätschaften. In vielen Fällen handelt es sich bei den Sendungen um von einem Postunternehmen zuzustellende Sendungen, die als Postsendungen bezeichnet werden können. Bedarfsweise handelt es sich bei den Sendungen um Briefsendungen, Paketsendungen und/oder Printprodukte. Dabei umfassen Paketsendungen auch Päckchen, während Printprodukte auch Prospekte, Broschüren und Zeitschriften sein können. Zudem kann eine Briefsendung neben einem Brief auch eine Postkarte sein. Bei Paketsendungen und anderen Sendungen handelte es sich in vielen Fällen um umverpackte Güter, wobei dann die Sendung die Verpackung und das darin verpackte Gut umfassen. Wenn einige dieser Sendungen, insbesondere Sendungen eines Postunternehmens, Paketsendungen, Briefsendungen und/oder Printprodukte, an ihrem Bestimmungsort, beispielsweise der Zieladresse oder beim Adressaten, abgegeben werden, spricht man regelmäßig von der Zustellung der Sendung. Bei anderen Sendungen spricht man auch vom Abliefern, Übergeben oder dem Abgeben der Sendung. Diese Unterscheidung ist vorliegend lediglich von untergeordneter Bedeutung, zumal die Grenzen zwischen dem Zustellen, Abliefern, Übergeben oder dem Abgeben, sofern sie tatsächlich existieren, nicht genau gezogen werden können und es für die vorliegende Erfindung auf eine genaue Grenzziehung oder Unterscheidung nicht oder lediglich untergeordnet ankommt.

Wenn die Sendungen nicht allzu groß sind, wie dies beispielsweise bei Paketsendungen der Fall ist, können die Sendungen in einem Regalsystem eines Laderaums des Zustellfahrzeugs verstaut werden. Entlang der Zustellroute werden die Sendungen aus den Regalen des Regalsystems entnommen und abgeliefert bzw. zugestellt. Meist sind die Regale zu beiden Seiten des Zustellfahrzeugs vorgesehen und durch einen zentralen Gang voneinander getrennt, so dass der Fahrer des Zustellfahrzeugs die Sendungen aus den Regalen nehmen kann. Mit einem Zustellfahrzeug werden meist nacheinander mehrere unterschiedliche Zustelltouren abgefahren, um alle Sendungen abliefern bzw. zustellen zu können. Nach jeder Fahrt bzw. nach jeder Zustelltour muss das Zustellfahrzeug wieder an ein Verteilzentrum oder ein Lager für die Sendungen, beispielsweise Warenlager, heranfahren, um dort weitere Sendungen in Empfang zu nehmen und im Regalsystem zu verstauen. Das wiederholte Beladen des Zustellfahrzeugs ist mit einem erhöhten Zeitaufwand und dementsprechend auch mit einem erhöhten Kostenaufwand verbunden. Die Sendungen werden nämlich typischerweise einzeln von Hand eingeladen und zwar in einer Anordnung und/oder Reihenfolge, die mit der nachfolgend abzufahrenden Zustellroute in Beziehung steht, so dass die Sendungen entlang der Zustellroute leichter und zuverlässiger zu entladen sind. Gleichwohl ergibt sich die genaue Zustellroute in den meisten Fällen erst, nachdem alle Sendungen eingeladen sind, und zwar anhand der jeweils geladenen Sendungen und jeweiligen Orte der Zustellung.

Vor dem Beladen des Zustellfahrzeugs ist also eine Vorsortierung der Sendungen erforderlich. Die Vorsortierung berücksichtigt dabei die bei der nächsten Zustelltour abzufahrende Zustellroute, wobei sich die abzufahrende Zustellroute nach den Zustellinformationen der Sendungen ergibt. Die exakte Sortierung und damit auch die exakte Zustellroute ergeben sich jedoch bedarfsweise erst beim Einladen der Sendungen in das Zustellfahrzeug. Die Orte, an denen die Sendungen zugestellt bzw. abgegeben werden sollen, bestimmen die abzufahrende Zustellroute, damit unnötige Wegstrecken und die dafür benötigte Zeit eingespart werden. Die Vorsortierung erfolgt daher nach vorgegebenen Kriterien, beispielsweise nach unterschiedlichen Gebieten oder Straßen, die zweckmäßig nacheinander abgefahren werden können, sofern dort überall auch Sendungen zugestellt werden müssen. Die Vorsortierung erfordert daher eine gewisse Erfahrung des Zustellers, weshalb die Vorsortierung auch vom Zusteller durchgeführt wird, der anschließend mit dem Zustellfahrzeug die Zustellroute abfährt. Auf diese Weise soll sichergestellt werden, dass die Zustellung entlang einer kurzen und schnell zu bewältigenden Zustellroute, also effizient, erfolgt. Der Zusteller kann nämlich aufgrund seiner Erfahrung eine zweckmäßige Zustellroute festlegen, die vielleicht objektiv länger aber dennoch schneller zu bewältigen ist.

Trotzdem ist es zur weiteren Effektivitätssteigerung erwünscht, die Stillstandszeiten der Zustellfahrzeuge zu verringern. Dies kann erreicht werden, indem beispielsweise die Vorsortierung beschleunigt wird oder vom Zusteller bereits vorsortierte Sendungen übernommen werden, auch wenn der Zusteller diese Sendungen vielleicht noch zweckmäßiger sortiert hätte. Dennoch ist die Effektivität der Zustellung von einer Reihe von Sendungen an unterschiedlichen Orten entlang von Zustellrouten noch nicht zufriedenstellend gelöst

Dokument DE 10 2010 030 776 A1 offenbart ein gattungsgemäßes Zustellfahrzeug zur Zustellung von Sendungen.

### Zusammenfassung einiger beispielhafter Ausführungsformen der Erfindung

Der Erfindung liegt daher die Aufgabe zugrunde, das Zustellfahrzeug und das Verfahren zum Zustellen von Sendungen jeweils der eingangs genannten Art derart auszugestalten und weiterzubilden, dass eine effektivere Zustellung von Sendungen an unterschiedlichen Orten entlang von Zustellrouten ermöglicht wird.

Diese Aufgabe wird gemäß Anspruch 1 gelöst durch ein Zustellfahrzeug zur Zustellung von Sendungen an unterschiedlichen Orten einer Zustellroute, mit wenigstens einer Aufnahmeeinrichtung zum Aufnehmen der Sendungen, mit wenigstens einer Sensoreinrichtung zum separaten Erfassen von Zustellinformationen der über die Aufnahmeeinrichtung aufgenommenen Sendungen, mit wenigstens einer Lagereinrichtung zum Lagern der aufgenommenen Sendungen während der Zustellung anderer Sendungen und mit wenigstens einer Fördereinrichtung zum Fördern der aufgenommenen Sendungen von der Aufnahmeeinrichtung zu Lagerpositionen der Lagereinrichtung und von den Lagerpositionen der Lagereinrichtung zu einer Abgabeeinrichtung zum Abgeben der Sendungen am jeweiligen Ort der Zustellung der Sendungen.

Zudem wird die genannte Aufgabe gemäß Anspruch 8 durch ein Verfahren zum Zustellen von Sendungen an unterschiedlichen Orten entlang einer Zustellroute mit einem Zustellfahrzeug, vorzugsweise nach einem der Ansprüche 1 bis 7, gelöst,
- bei dem die zuzustellenden Sendungen unsortiert über wenigstens eine Aufnahmeeinrichtung des Zustellfahrzeugs an das Zustellfahrzeug übergeben werden,
- bei dem Zustellinformationen der aufgenommenen Sendungen separat von wenigstens einer Sensoreinrichtung erfasst werden,
- bei dem die Sendungen von wenigstens einer Fördereinrichtung zu Lagerpositionen wenigstens einer Lagereinrichtung gefördert werden,
- bei dem die Sendungen in den Lagerpositionen zwischengelagert werden,
- bei dem die Sendungen von den Lagerpositionen von der Fördereinrichtung zu wenigstens einer Abgabeeinrichtung gefördert werden und
- bei dem an unterschiedlichen Orten der Zustellroute die zur Abgabeeinrichtung geförderten Sendungen abgegeben werden.

Die Erfindung hat erkannt, dass die Effektivität der Zustellung von Sendungen entlang einer Zustellroute dadurch verbessert werden kann, dass ganz auf die Vorsortierung der Sendungen vor der Aufnahme durch das Zustellfahrzeug bzw. vor der Übergabe an das Zustellfahrzeug verzichtet werden kann. Dies wird jedoch damit erkauft, dass eine Art der Sortierung im Zustellfahrzeug erfolgen muss. Dies ist nicht nur aufgrund der Platzverhältnisse aufwendig, sondern erfordert auch hinsichtlich des Zugfahrzeugs einen konstruktiv höheren Aufwand, um eine Art der Sortierung im Zustellfahrzeug durchführen zu können.

Darüber hinaus hat die Erfindung erkannt, dass die Effektivität trotz dieser vermeintlichen Nachteile gesteigert werden kann, indem die Sortierung sehr stark vereinfacht wird. Auf diese Weise wird so letztlich die Beschleunigung der Zustellung insgesamt erreicht und zudem dafür Sorge getragen, dass der konstruktive Aufwand bezogen auf die Zustellfahrzeuge hinsichtlich der in den Zustellfahrzeugen durchzuführenden Sortierung auf ein vertretbares Maß begrenzt wird. Zur Übergabe der Sendungen an das Zustellfahrzeug, etwa in einem Verteilzentrum oder einem Lager für die Sendungen, beispielsweise Warenlager, ist das Zustellfahrzeug mit einer Aufnahmeeinrichtung ausgerüstet.

Über die Aufnahmeeinrichtung werden die Sendungen von dem Zustellfahrzeug aufgenommen, wonach die eigentliche Verarbeitung der Sendungen im Zustellfahrzeug erfolgt. Diese Verarbeitung sieht vor, dass die Sendungen von wenigstens einer Sensoreinrichtung erfasst werden, die bedarfsweise in die Aufnahmeeinrichtung integriert werden kann. Damit auch alle Sendungen erfasst werden können, kann die Sensoreinrichtung eine ausreichende Anzahl von Sensorelementen aufweisen und/oder eine ausreichende Anzahl von Sensoreinrichtungen vorgesehen sein. Alternativ oder zusätzlich bietet es sich jedoch an, die Sendungen möglichst einzeln und/oder möglichst nacheinander an der wenigstens einen Sensoreinrichtung vorbeizuführen, so dass alle Sendungen zuverlässig erfasst werden können.

Beim Erfassen der Sendungen werden wenigstens Zustellinformationen der Sendungen erfasst. Diese Zustellinformationen geben wenigstens vor, an welchem Ort die Sendungen abzugeben bzw. zuzustellen sind. Es können jedoch noch weitere Informationen betreffend die Art und Weise der Zustellung erfasst werden. Es kann beispielsweise erfasst werden, an wen die Zustellung zu bewirken ist bzw. wo und wie die Sendung am Ort der Zustellung abgelegt werden soll, um vom Adressaten, bedarfsweise zu einem späteren Zeitpunkt, in Empfang genommen zu werden. Die Sendungen können beispielsweise an Personen erfolgen, die an den Orten der Zustellung angetroffen werden oder persönlich lediglich an vorbestimmte Personen. Es kann auch vorgesehen sein, dass die Sendungen am Ort der Zustellung abgelegt, insbesondere in einen Paketkasten, eine Packstation oder eine andere Einrichtung am Ort der Zustellung abgelegt werden. Die aufgenommenen Sendungen werden mit Hilfe wenigstens einer Fördereinrichtung an eine Lagereinrichtung im Zustellfahrzeug übergeben und in Lagerpositionen zwischengespeichert, bis die Abgabe bzw. die Zustellung zu bewirken ist, also an dem Ort der Zustellung entlang der Zustellroute, die mit der Zustellinformation korreliert.

Die Lagerposition, an der eine Sendung zwischengespeichert wird, kann abhängig sein von der erfassten Zustellinformation der jeweiligen Sendung. Dann können Sendungen beispielsweise in der Reihenfolge in der Lagereinrichtung zwischengespeichert werden, in der die Sendungen anschließend zugestellt bzw. abgegeben werden. Es kann aber auch eine andere Sortierung anhand der Zustellinformationen vorgenommen werden. Besonders einfach und schnell erfolgt die Verarbeitung der aufgenommenen Sendungen, wenn die Sendungen einfach der Reihe nach auf aufeinanderfolgenden oder sogar beliebigen Lagerpositionen in der Lagereinrichtung zugeordnet werden. Prinzipiell können die Sendungen auch vollkommen unsortiert in der Lagereinrichtung zwischengelagert werden.

Die Zustellinformation, die über die Zustellung, insbesondere den Ort der Zustellung bestimmt, kann mit einer beliebigen Lagerposition verknüpft werden, die der jeweiligen Sendung zugeordnet ist. Die Zuordnung der Zustellposition zu einer Lagerposition kann dabei direkt oder indirekt über die Sendung erfolgen. Es kann also einerseits erfasst und/oder gespeichert werden, welche Sendung an welcher Lagerposition zwischengespeichert ist, und andererseits festgehalten werden, welche Zustellungsinformation welcher Sendung zugeordnet ist. Wenn eine Sendung zugestellt werden soll, weil das Zustellfahrzeug am Ort der Zustellung oder in der Nähe dieses Orts ist, kann geprüft werden, welcher Lagerposition die Sendung mit den entsprechenden Zustellinformationen zugeordnet ist, um die Sendung aus dieser Lagerposition an die wenigstens eine Fördereinrichtung abzugeben. Es kann aber auch direkt ermittelt werden, welcher Lagerposition die Zustellinformation zugeordnet ist, die zu der als nächstes zuzustellenden Sendung gehört und die Sendung dieser Lagerposition an die wenigstens eine Fördereinrichtung abgegeben werden.

Über die Fördereinrichtung werden die Sendungen von der jeweiligen Lagerpositionen der Lagereinrichtung zu einer Abgabeeinrichtung zum Abgeben der Sendungen am jeweiligen Ort der Zustellung der Sendungen transportiert. Der Einfachheit halber handelt es sich dabei um eine Fördereinrichtung, die auch dem Transportieren der Sendungen von der Aufnahmeeinrichtung zur jeweiligen Lagerposition dienen kann. Besonders bevorzugt ist es dabei aus konstruktiver Sicht, wenn überhaupt nur eine Fördereinrichtung vorgesehen ist, um die Sendungen zu den Lagerpositionen zu fördern und um die Sendungen von den Lagerpositionen zur Abgabeeinrichtung zu fördern. Auch in diesem Fall kann die wenigstens eine Fördereinrichtung aus einer Reihe von separaten Förderelementen gebildet werden. Dann sind diese Förderelemente aber vorzugsweise entlang eines Förderwegs nacheinander angeordnet. Dies kann bedarfsweise in einer Weise der Fall sein, dass eine Sendung direkt von der Aufnahmeeinrichtung zur Abgabeeinrichtung gefördert werden kann, ohne dass die Sendung an eine Lagerposition der Lagereinrichtung abgegeben werden muss. So kann beispielsweise auch die Fördereinrichtung selbst Lagerpositionen bereitstellen. Ohne Lagerpositionen der Lagereinrichtung ist aber dennoch eine unsortierte Aufnahme und anschließend sortierte Abgabe der Sendungen nicht oder nur bedingt möglich.

Der besseren Verständlichkeit halber und zur Vermeidung von unnötigen Wiederholungen werden das Zustellfahrzeug und das Verfahren zur Zustellung von Sendungen nachfolgend gemeinsam beschrieben, ohne jeweils im Einzelnen zwischen dem Zustellfahrzeug und dem Verfahren zu unterscheiden. Für den Fachmann wird jedoch anhand des Kontextes ersichtlich, welche Merkmale hinsichtlich des Zustellfahrzeugs und des Verfahrens jeweils bevorzugt sind.

Bei einem ersten besonders bevorzugten Zustellfahrzeug weist die Sensoreinrichtung wenigstens einen optischen Sensor auf. Dies erlaubt eine einfache, zuverlässige und kostengünstige Erfassung der beispielsweise auf die Sendungen aufgedruckten oder aufgeklebten Zustellinformationen. Alternativ oder zusätzlich ist es bevorzugt, wenn die Sendungen Zustellinformationen in Form von 2D-Barcodes und/oder 3D-Barcodes aufweisen. Diese sind einfach anzubringen und zuverlässig auszulesen. Um sicherzustellen, dass die Zustellinformationen von der wenigstens einen Sensoreinrichtung auch erfasst werden, kann es sich anbieten, wenn die Zustellinformationen an mehreren Seiten und/oder Stellen der Sendungen vorgesehen werden.

Um die Schwerkraft beim Transport der Sendungen von der Aufnahmeeinrichtung zur Abgabeeinrichtung auszunutzen, wodurch die die Aufnahmeeinrichtung und die Abgabeeinrichtung miteinander verbindende wenigstens eine Fördereinrichtung einfacher ausgebildet werden kann, bietet es sich an, wenn die Aufnahmeeinrichtung eine im Dach des Zustellfahrzeugs vorgesehene Öffnung zum Aufnehmen der Sendungen über das Dach aufweist. Alternativ oder zusätzlich kann die Aufnahmeeinrichtung zum Zuführen der Sendungen aber auch über eine Seitenwand und/oder über eine Rückwand erfolgen. Dabei ist die Aufnahmeeinrichtung bevorzugt einem oberen Rand der entsprechenden Seitenwand bzw. der entsprechenden Rückwand zugeordnet. Auch im Falle einer Seitenwand oder einer Rückwand bietet es sich an, wenn diese eine Öffnung zum Zuführen der Sendungen zur Aufnahmeeinrichtung aufweisen. Die Öffnung, sei sie im Dach, in einer Seitenwand oder in der Rückwand des Zustellfahrzeugs vorgesehen, ist bevorzugt durch eine Verschlusseinrichtung verschließbar. Dann kann das Eindringen von Feuchtigkeit und Schmutz vermieden werden, während das Zustellfahrzeug die Zustellroute abfährt bzw. sich auf der Zustelltour befindet.

Die wenigstens eine Fördereinrichtung kann so ausgebildet sein, dass die Sendungen von einer oberen Aufnahmeeinrichtung zu einer unteren Abgabeeinrichtung gefördert werden. Dies ist einfach und zuverlässig und erlaubt die Ausnutzung der Schwerkraft. Dabei kann die Förderung der Sendungen stufenweise erfolgen. Es kann also beispielsweise eine Förderung der Sendungen über verschiedene Ebenen im Zustellfahrzeug vorgesehen sein, und zwar wiederum vorzugsweise von oben nach unten. Entlang der entsprechenden Ebenen können die Sendungen beispielsweise den einzelnen Lagerpositionen der wenigstens einen Lagereinrichtung zugeführt werden, wobei die Lagerpositionen auch wenigstens im Wesentlichen auf den Ebenen der wenigstens einen Fördereinrichtung angeordnet sind. Um die Sendungen von Ebene zu Ebene nach unten weiterzufördern, bietet es sich der Einfachheit halber an, wenn die Fördereinrichtung mehrere Förderelemente in Form von Rutschen und/oder Rollenförderern aufweist.

Die Fördereinrichtung kann wenigstens ein Förderelement in Form eines Förderbands, wenigstens eines Kippschalenförderers und/oder eines Rollenförderers aufweisen. Dies dient einer einfachen und zuverlässigen Handhabung der Sendungen. Bei einem Kippschalenförderer sind Kippschalen zur Förderung der Sendungen vorgesehen, die untereinander verbunden sind und hintereinander in die Transportrichtung transportiert werden. Die Kippschalen können zudem zu wenigstens einer Seite gekippt werden, um Sendungen von den Kippschalen zur Seite herunterrutschen zu lassen. In diesem Zusammenhang bietet es sich besonders an, wenn die Kippschalen zu gegenüberliegenden Seiten gekippt werden können. Von den Kippschalen können die Sendungen in Lagerpositionen der wenigstens einen Lagereinrichtung herunterrutschen. Dabei kann die Lagereinrichtung bedarfsweise ebenfalls Kippschalen aufweisen, wobei jede Kippschale eine Lagerposition bereitstellen kann. Dann können die Sendungen aus den Kippschalen der Lagereinrichtung wieder durch Kippen der Kippschalen an die Fördereinrichtung abgegeben werden, und zwar bedarfsweise jeweils in eine leere Kippschale der entsprechenden Fördereinrichtung. Unabhängig von Kippschalen können aber auch andere Leitmittel wie Schieber, Mitnehmer oder dergleichen vorgesehen sein, um die Sendungen von der wenigstens einen Fördereinrichtung an die wenigstens eine Lagereinrichtung abzugeben und/oder umgekehrt.

Bei Verwendung eines Rollenförderers kann dieser wenigstens auch Allseitenräder, die auch als omnidirektionale Räder bezeichnet werden, aufweisen, um die Sendungen beim Transport entlang des Rollenförderers gezielt auch zur Seite lenken können. Entsprechende Rollenförderer werden entsprechend auch als omnidirektionale Förderer bezeichnet. Bei einem omnidirektionalen Rad befinden sich entlang der Lauffläche des Rads und über den Umfang der Lauffläche verteilt eine Mehrzahl von Rollen, deren Drehachsen zur Drehachse des omnidirektionalen Rads, insbesondere um wenigstens 45°, geneigt sind, vorzugsweise wenigstens im Wesentlichen im rechten Winkel zur Drehachse des omnidirektionalen Rads angeordnet sind. Das bevorzugte omnidirektionale Rad kann damit die auf dem Rad angeordnete Sendung in einer Richtung antreiben, die tangential zum Umfang des omnidirektionalen Rads im Bereich der Kontaktfläche zwischen dem omnidirektionalen Rad und der Sendung, und zwar insbesondere parallel zur Transportebene der Sendung entlang des omnidirektionalen Förderers, ausgerichtet ist. Senkrecht dazu in derselben Ebene kann dagegen keine nennenswerte Kraft übertragen werden. In dieser Richtung gleitet die Sendung über wenigstens eine Rolle des Umfangs des omnidirektionalen Rads ab. Wenn entsprechend viele omnidirektionale Räder mit unterschiedlich ausgerichteten Drehachsen vorgesehen sind, können die Sendungen ganz gezielt und nahezu ohne Einschränkung entlang des omnidirektionalen Förderers bewegt werden, und zwar insbesondere dann, wenn der omnidirektionale Förderer wenigstens im Wesentlichen horizontal ausgerichtet ist.

Zudem ist es bevorzugt, wenn die Sendungen immer auf mehreren Allseitenrädern aufliegen und/oder wenn die Drehachsen der Allseitenräder wenigstens in drei unterschiedliche Richtungen weisen, die weiter bevorzugt gegeneinander jeweils um einen Winkel von wenigstens im Wesentlichen 120° und/oder 60° versetzt sind und wenigstens im Wesentlichen in einer gemeinsamen Ebene angeordnet sind. Alternativ oder zusätzlich kann auch vorgesehen sein, dass sich die Allseitenräder wenigstens teilweise mit einer unterschiedlichen Umfangsgeschwindigkeit um ihre Drehachse gedreht werden. Auch dadurch können durch die Allseitenräder unterschiedliche Bewegungskomponenten auf die Sendungen übertragen werden, um diese entlang einer bestimmten Bahn zu leiten.

Die zuvor genannten Förderelemente der Fördereinrichtung können bedarfsweise auf wenigstens einer Ebene der Fördereinrichtung vorgesehen sein und/oder die entsprechende Ebene bilden. Wenn die Ebene durch wenigstens einen omnidirektionalen Förderer gebildet wird, kann auch von einem omnidirektionalen Boden gesprochen werden, auf dem die Sendungen dann entlang einer nahezu beliebigen Bewegungsbahn transportiert werden kann, wobei jede Sendung bedarfsweise entlang einer anderen Bewegungsbahn transportiert werden kann als wenigstens einige andere oder gar alle anderen Sendungen. Der Transport einer Sendung kann in jeder Richtung entlang der Ebene des Rollenförderers bewegt werden, wobei sich diese Richtung während des Transports bedarfsweise ständig ändern kann. Die Sendungen können auf dem omnidirektionalen Boden gezielt an eine Lagerposition bewegt werden. Dabei kann auch Rücksicht auf die Größe, insbesondere die Grundfläche, der Sendungen genommen werden. Dies bedeutet, dass kleinere Sendungen in näher beieinanderliegende, aneinander angrenzende Lagerpositionen bewegt werden können, während größere Sendungen in weiter voneinander entfernte, aneinander angrenzende Lagerpositionen bewegt werden. So kann die für die Lagerung zur Verfügung stehende Fläche besser ausgenutzt werden. Um die Größe der Sendungen zu ermitteln, kann diese direkt erfasst werden, und zwar beispielsweise mittels wenigstens eines Sensors, insbesondere optischen Sensors. Die Lagereinrichtung kann in diesem Falle sehr flexibel durch die Fördereinrichtung gebildet werden. Es gibt also keine festen Lagerpositionen und es können bedarfsweise auch Sendungen entlang einer nicht geradlinigen Bahn an den in den Lagerpositionen angeordneten Sendungen einer Ebene vorbeigeführt werden, ohne dass es dabei zu unerwünschten Kollisionen kommt. Prinzipiell kann die Lagereinrichtung aber auch wenigstens teilweise durch wenigstens ein anderes Förderelement als einen omnidirektionalen Förderer gebildet sein. Zudem ist es grundsätzlich bevorzugt, wenn die Lagerpositionen zu beiden Seiten eines zentralen Streifens vorgesehen sind, der wahlweise von demselben Förderelement oder einem anderen Förderelement gebildet werden kann.

Um die Sendungen zuverlässig handhaben zu können, kann die wenigstens eine Fördereinrichtung, die wenigstens eine Lagereinrichtung oder zusätzliche Handhabungseinrichtungen wenigstens Leitmittel zum Abgeben der Sendungen von der Fördereinrichtung an bestimmte Lagerpositionen der Lagereinrichtung und/oder von bestimmten Lagerpositionen der Lagereinrichtung an die Fördereinrichtung aufweisen. Die Leiteinrichtungen stellen also bedarfsweise sicher, dass eine Sendung an der gewünschten Stelle von der Fördereinrichtung an eine Lagerposition der Lagereinrichtung bewegt wird. Alternativ oder zusätzlich können die Leiteinrichtungen aber auch sicherstellen, dass die Sendungen von ihren Lagerpositionen in der wenigstens einen Lagereinrichtung an die wenigstens eine Fördereinrichtung abgegeben werden, wenn die Sendungen zur Abgabeeinrichtung weitergeleitet werden sollen. Die Leiteinrichtungen können dabei über eine Steuereinrichtung angesteuert werden, so dass ein geordnetes Abgeben der Sendungen von der Fördereinrichtung an bestimmte Lagerpositionen und von den bestimmten Lagerpositionen zu gegebener Zeit zurück an die Fördereinrichtung oder an eine andere Fördereinrichtung sichergestellt werden kann.

Alternativ oder zusätzlich kann eine Steuereinrichtung zum Steuern der Fördereinrichtung zur Lagerung der Sendungen in bestimmten Lagerpositionen der Lagereinrichtung vorgesehen sein. Es wird also beispielsweise durch die Steuereinrichtung vorgegeben, bis zu welcher Lagerposition eine bestimmte Sendung transportiert wird. Dies kann in einem einfachen Fall die nächste und/oder letzte freie Lagerposition der Lagereinrichtung oder aber eine für die Sendung bzw. in Bezug auf die Zustellinformationen der Sendung geeignete Lagerposition sein. Die Übergabe der Sendung von der Fördereinrichtung an die entsprechende Lagerposition kann dann ebenfalls durch diese Steuereinrichtung gesteuert werden. Hierbei kann die Übergabe bedarfsweise von der Fördereinrichtung, von der Lagereinrichtung, von einer Leiteinrichtung und/oder einer Kombination aus diesen Einrichtungen bewirkt werden. Insbesondere für den Fall, dass die Fördereinrichtung und die Lagereinrichtung zu einer Einheit oder Einrichtung verschmelzen, kann nicht immer klar zugeordnet werden, ob die Übergabe der Sendung von einer Fördereinrichtung oder einer Lagereinrichtung bewirkt wird, weil die Fördereinrichtung und die Lagereinrichtung nicht voneinander separiert sind. Der Übergang der Fördereinrichtung und der Lagereinrichtung ist, wenn er überhaupt gegebenen ist, unter Umständen fließend.

Die wenigstens eine Steuereinrichtung kann alternativ oder zusätzlich auch die Abgabe von Sendungen von der Lagerposition der Lagereinrichtung an die Fördereinrichtung steuern und insbesondere hinsichtlich der Reihenfolge und/oder der zeitlichen Abfolge vorgeben. So kann die Abgabe der Sendungen von der Lagereinrichtung an die Fördereinrichtung an die Zustellroute und das Erreichen der Orte der Zustellung der Sendungen angepasst werden. Analog zur Übergabe der Sendungen von der Fördereinrichtung an die Lagerpositionen kann die Übergabe von den Lagerpositionen an die Fördereinrichtung alternativ oder zusätzlich von der Fördereinrichtung, von der Lagereinrichtung, von einer Leiteinrichtung und/oder einer Kombination aus diesen Einrichtungen bewirkt werden. Auch hier kann sich hinsichtlich der Art der Übergabe auswirken, wie die wenigstens eine Fördereinrichtung und/oder die wenigstens eine Lagereinrichtung ausgebildet ist.

Alternativ oder zusätzlich kann wenigstens eine Sensoreinrichtung mit wenigstens einem Sensor vorgesehen sein, um Lagerinformationen der Sendungen zu erfassen. Die Steuereinrichtung kann dann anhand der Lagerinformationen festlegen, in welcher Lagerposition eine Sendung zwischenzulagern ist. Die Lagerinformation kann bespielweise mit der Größe, der Grundfläche, bestimmten Abmessungen, wie etwa Länge und Breite der Sendungen, korrelieren. So können die Sendungen platzsparend im Zustellfahrzeug aufgenommen werden. Es kann beispielsweise unterschiedliche Lagerpositionen für unterschiedlich große Sendungen geben. Im Falle von Kippschalen können beispielsweise Lagerpositionen definierende Kippschalen in unterschiedlichen Größen vorgesehen sein. Anhand der Lagerinformation wird nun eine Sendung einer bestimmten freien Kippschale zugeordnet, die für die Sendung der entsprechenden Größe geeignet ist. Dasselbe Prinzip kann aber auch ohne die Verwendung von Kippschalen angewendet werden. Beispielsweise kann es zweckmäßig sein, die Lagerpositionen wenigstens teilweise durch Trennmittel so zu trennen, dass eine Sendung nicht von einer Lagerposition in eine angrenzende Lagerposition verrutschen kann. Besonders zweckmäßig kann es sein, wenn wenigstens im Wesentlichen alle Lagerpositionen durch entsprechende Trennmittel von anderen Lagerpositionen getrennt sind. Alternativ oder zusätzlich können wenigstens zwei Sendungen wenigstens im Wesentlichen in voneinander über wenigstens ein Trennmittel getrennte Lagerpositionen zwischengespeichert bzw. gelagert werden. Im Falle eines omnidirektionalen Bodens können die Sendungen unmittelbar aneinander angrenzend gelagert werden. Die Sendungen können sich dabei wenigstens im Wesentlichen gegenseitig an einem Verrutschen hindern. Wenn dabei Sendungen unterschiedlicher Größe für eine Zustelltour gehandhabt werden müssen, kann es vorteilhaft sein, dem omnidirektionalen Boden keine festen separaten Lagerpositionen zuzuweisen. Die Sendungen werden dann vielmehr so dicht gepackt, wie dies möglich ist oder wie ein versehentliches Verrutschen der Sendungen hinreichend verhindert werden kann. Der Platz des omnidirektionalen Bodens, der von den entsprechenden Sendungen jeweils eingenommen wird, bildet dann die jeweilige Lagerposition für die jeweilige Sendung. Bei der nächsten Zustelltour können die Lagerpositionen auf dem omnidirektionalen Boden daher bedarfsweise völlig anders verteilt sein. Mit dem omnidirektionalen Boden wird daher eine sehr hohe Flexibilität bei der Handhabung der Sendungen erreicht.

Unabhängig von der Lagerung der Sendungen kann die wenigstens eine Sensoreinrichtung mit einer Navigationseinrichtung des Zustellfahrzeugs verbunden sein. Auf diese Weise kann die jeweilige Zustellroute automatisch anhand der Zustellinformationen der Sendungen ermittelt werden. Dabei ist es möglich, weitere Vorgaben für die Ermittlung der Zustellroute zu berücksichtigen. Mit diesen Vorgaben können Erfahrungen des jeweiligen Zustellers von dem entsprechenden Zustellgebiet und dessen Verkehrssituation berücksichtigt werden. Beispielsweise können bestimmte Straßen, Kreuzungen oder Teilgebiete bei der Ermittlung der Zustellroute vermieden werden, die ein höheres Staurisiko aufweisen oder grundsätzlich zu Verzögerungen führen. Unter Umständen können die Vorgaben auch zeitabhängig berücksichtigt werden, um etwa im Berufsverkehr andere Zustellrouten zu bevorzugen als in Zeiten geringen Verkehrsaufkommens.

Um eine zügige Abgabe der Sendungen am Ort der Zustellung zu erreichen, kann eine Ortungseinrichtung, etwa als Teil der Navigationseinrichtung, vorgesehen sein, die erkennt, wo sich das Zustellfahrzeug gerade befindet. Wenn diese Ortsinformation durch eine Steuereinrichtung mit den Zustellinformationen der Sendungen verbunden wird, lässt sich automatisch erkennen, wenn der nächste Zustellort in Kürze erreicht wird. Es kann also automatisch mit der Abgabe der wenigstens einen als nächstes zu entladenen Sendung an die Fördereinrichtung und, bedarfsweise, mit der Förderung der abzugebenden Sendung mittels der Fördereinrichtung zur Abgabeeinrichtung begonnen werden. Dann ist beispielsweise die wenigstens eine als nächstes zuzustellende Sendung bereits zur Zustellung bereit, wenn das Zustellfahrzeug den Ort der Zustellung erreicht. Die Zustellung kann dann wahlweise durch den Zusteller und/oder Fahrer des Zustellfahrzeugs oder automatisch, insbesondere autonom, erfolgen. Die automatische und/oder autonome Zustellung beschleunigt die Zustellung weiter und macht das Eingreifen des Zustellers entbehrlich, der sich folglich ganz auf das Fahren und den Verkehr konzentrieren kann, sofern nicht auch das Zustellfahrzeug die Zustellroute autonom abfährt.

Bei einem ersten besonders bevorzugten Verfahren zum Zustellen von Sendungen an unterschiedlichen Orten entlang einer Zustellroute wird die Zustellinformation und/oder die Lagerinformation der Sendungen über wenigstens eine Sensoreinrichtung erfasst. Die wenigstens eine Sensoreinrichtung weist dazu vorzugsweise wenigstens einen Sensor auf, bei dem es sich der Einfachheit und zuverlässigen Erfassung der Zustellinformation und/oder der Lagerinformation halber um einen optischen Sensor handeln kann. Alternativ oder zusätzlich ist es für die zuverlässige Erfassung der Zustellinformation und/oder der Lagerinformation besonders zweckmäßig, wenn die Zustellinformation und/oder die Lagerinformation von einem auf den Sendungen vorgesehenen 2D-Barcode und/oder einem 3D-Barcode erfasst werden. Geeignete Sensoren sind dazu aus dem Stand der Technik bekannt. Die Lagerinformationen und/oder die Zustellinformationen werden vorzugsweise durch eine Steuereinrichtung gespeichert und mit den entsprechenden Sendungen verknüpft. Somit ist bekannt, welche Zustellinformation und/oder welche Lagerinformation zu welcher Sendung gehört. Die Zustellinformation kann alternativ oder zusätzlich auch mit der Lagerinformation oder mit der Lagerposition der entsprechenden Sendung verknüpft werden. Die Lagerinformation bestimmt in diesem Zusammenhang bevorzugt eindeutig die Lagerposition, was jedoch grundsätzlich nicht zwingend erforderlich ist. Dann ist für die Steuereinrichtung, die die den Sendungen zugeordnete Lagerinformationen speichert, bekannt, in welcher Lagerposition welche Sendung mit welcher Zustellposition vorgesehen ist. Verfahrensgemäß bietet es sich an, die Zustellroute anhand der Zustellinformationen der Sendungen zu ermitteln, die von der wenigstens einen Sensoreinrichtung erfasst werden, um die Zustellung schneller bewerkstelligen zu können. Dabei kann eine Navigationseinrichtung das Zustellfahrzeug entlang der Zustellroute nacheinander zu den Orten der Abgabe der Sendungen leiten. Die Navigationseinrichtung gibt also nicht nur die Zustellroute, sondern auch die Orte vor, an denen die Zustellung der einzelnen Sendungen bewirkt werden soll.

Bedarfsweise kann über wenigstens eine Ortungseinrichtung die aktuelle Position des Zustellfahrzeugs ermittelt werden, während sich das Zustellfahrzeug entlang der Zustellroute bewegt. So kann rechtzeitig eine Annäherung an den nächsten Zustellort ermittelt werden, an dem die wenigstens eine nächste Sendung zugestellt werden soll. Somit kann auch anhand der aktuellen Position des Zustellfahrzeugs eine als nächstes abzugebende Sendung und/oder die wenigstens eine Lagerposition der wenigstens einen als nächstes abzugebenden Sendung ermittelt werden. Es kann also rechtzeitig das Abgeben der wenigstens einen als nächstes abzugebenden Sendung automatisch initiiert werden, ohne dass dies durch den Zusteller manuell erfolgen muss und/oder dass dazu der Ort der Zustellung der wenigstens einen als nächstes zuzustellenden Sendung bereits erreicht sein muss. Weiter bevorzugt ist es in diesem Zusammenhang, wenn neben dem aktuellen Ort des Zustellfahrzeugs auch die Zustellroute des Zustellfahrzeugs berücksichtigt wird. So wird sichergestellt, dass die vermeintlich als nächstes zuzustellende Sendung auch tatsächlich die als nächstes zuzustellende Sendung ist. Alternativ oder zusätzlich wird so eine genauere Vorhersage möglich, wann die Zustellung der als nächstes zuzustellenden Sendung tatsächlich zu bewirken sein wird.

Bei der Zustellung der Sendungen werden beispielsweise der Reihe nach an den Orten der Zustellung, die von dem Zustellfahrzug entlang der Zustellroute angefahren werden, die jeweils als nächstes abzugebenden Sendungen abgegeben bzw. zugestellt. Zu diesem Zweck wird vorzugsweise die wenigstens eine als nächstes abzugebende Sendung zuvor von der Lagerposition an die wenigstens eine Fördereinrichtung bzw. an das wenigstens eine Förderelement der wenigstens einen Fördereinrichtung abgegeben. Die Fördereinrichtung kann dann die wenigstens eine als nächstes abzugebende Sendung zur Abgabeeinrichtung fördern, von wo aus die Abgabe oder die Zustellung der entsprechenden Sendung erfolgt. Die Fördereinrichtung wird dabei bevorzugt die Sendung zur Abgabeeinrichtung fördern, wenn anhand des Ortes des Zustellfahrzeugs festgestellt worden ist, dass der mit der wenigstens einen als nächstes abzugebenden Sendung verknüpfte Ort der Zustellung in Kürze erreicht wird oder bereits erreicht worden ist.

Um die Verfahrensführung einfach zu halten und das Handling der Sendungen zu beschleunigen, können die Sendungen der Reihe nach an aufeinanderfolgende Lagerpositionen im Zustellfahrzeug abgegeben werden. Dabei ist es beispielsweise besonders effektiv, wenn zunächst die der wenigstens einen Abgabeeinrichtung am nächsten liegende Lagerposition mit einer Sendung belegt wird. Danach können dann sukzessive die weiter von der Abgabeeinrichtung weg liegenden, also weiter von der Abgabeeinrichtung beabstandeten, Lagerpositionen belegt werden. Dies kann solange erfolgen, bis alle Lagerpositionen des Zustellfahrzeugs und/oder der Lagereinrichtung mit Sendungen belegt sind. Alternativ können die Sendungen aber auch anhand von den Sendungen zugeordneten Lagerinformationen bestimmten Lagerpositionen zugeordnet werden. Die Lagerinformationen können dabei Angaben zur Größe, zu bestimmten Abmessungen, zur Größe der Grundfläche und/oder Form der Grundfläche enthalten. Anhand dieser Informationen kann beispielsweise abgeleitet werden, in welchen Lagerpositionen die Sendungen aufgenommen werden können und/oder wie die Sendungen platzsparend in der Lagereinrichtung gelagert werden können, bis die Sendungen wieder von den Lagerpositionen an die Fördereinrichtung übergeben werden, um von dem wenigstens einen Förderelement der wenigstens einen Fördereinrichtung an den entsprechenden Orten der Zustellung zugestellt zu werden.

Um das Beladen des Zustellfahrzeugs mit Sendungen, die entlang einer Zustellroute zugestellt werden sollen, zu vereinfachen, können die Sendungen über eine Öffnung im Dach, im oberen Randbereich einer Seitenwand und/oder im oberen Randbereich der Rückwand der Aufnahmeeinrichtung zugeführt werden. Die Zuführung der Sendungen in einem oberen Bereich des Zustellfahrzeugs hat zudem grundsätzlich den Vorteil, dass bei der Förderung der Sendungen von der Aufnahmeeinrichtung, die der entsprechenden Öffnung im Zustellfahrzeug nachgeschaltet sein kann, zur Abgabeeinrichtung, zur Lagerposition und/oder von der Lagerposition zur Abgabeeinrichtung die Schwerkraft ausgenutzt werden kann.

Alternativ oder zusätzlich kann das Beladen des Zustellfahrzeugs dadurch vereinfacht werden, dass die Sendungen nacheinander dem Zustellfahrzeug bzw. der Aufnahmeeinrichtung zugeführt werden. Dies ist einfach dadurch möglich, dass die Sendungen beispielsweise über ein Förderband separat herantransportiert werden, um beispielsweise anschließend nacheinander durch die Öffnung in das Zustellfahrzeug zu gelangen, insbesondere zu fallen oder zu rutschen. Das separate Zuführen der Sendungen nacheinander hat den Vorteil, dass die Zustellinformationen der Sendungen durch die Sensoreinrichtung zuverlässig erfasst werden können. Es können aber auch Sendungen gruppenweise zusammen dem Zustellfahrzeug zugeführt werden, wobei ebenfalls bedarfsweise ein Förderband vorgesehen sein kann. Wenn jedoch die Sendungen ohnehin gruppenweise zusammen dem Zustellfahrzeug zugeführt werden, kann es einfach und schneller sein, wenn die Sendungen, beispielsweise aus einem Rollwagen oder einem anderen Behälter über die entsprechende Öffnung in das Zustellfahrzeug und/oder in die Aufnahmeeinrichtung des Zustellfahrzeugs gekippt werden. Insbesondere in diesem Fall, aber auch grundsätzlich, kann es bevorzugt sein, die Sendungen zunächst, beispielsweise mit einer Vereinzelungseinrichtung, zu vereinzeln, bevor die Zustellinformationen durch den wenigstens einen Sensor der wenigstens einen Sensoreinrichtung erfasst werden. Die Vereinzelung der Sendungen kann bedarfsweise platzsparend außerhalb des Zustellfahrzeugs und/oder in der Aufnahmeeinrichtung des Zustellfahrzeugs durchgeführt werden. Es kann aber zuverlässiger sein, wenn die Vereinzelung erst nach der Aufnahmeeinrichtung erfolgt.

Eine einfache und sichere Handhabung wird beispielsweise erreicht, wenn die Sendungen über wenigstens eine Fördereinrichtung in Form eines Förderbands, eines Kippschalenförderbands und/oder eines, vorzugsweise Allseitenräder aufweisenden, Rollenförderers transportiert werden. Dabei kann es besonders zweckmäßig sein, wenn die Fördereinrichtung mehrere Ebenen im Zustellfahrzeug definiert. In den entsprechenden Ebenen können dann die Sendungen bedarfsweise horizontal transportiert und beispielsweise an Lagerpositionen der Lagereinrichtung übergeben werden. Die Sendungen können einfach über Rutschen und/oder Rollenförderer zwischen wenigstens zwei, insbesondere benachbarten Ebenen, gefördert werden.

In wenigstens einer Ebene können die Sendungen bedarfsweise mittels eines Allseitenräder aufweisenden Rollenförderers gefördert werden, und zwar entlang der Ebene und/oder zu Lagerpositionen für die Sendungen. Dabei kann es sich der Einfachheit halber anbieten, wenn auch die Lagerpositionen mit Allseitenrädern ausgerüstet sind. Dann können die Förderung der Sendungen bis zur Lagerposition und die Förderung der Sendungen von der Lagerposition weg mittels Allseitenrädern erfolgen. Dabei kann die Flexibilität bei der Förderung der Sendungen mit den Allseitenrädern besonders effektiv ausgenutzt werden. Es kann zudem ein durchgehender omnidirektionaler, Allseitenräder aufweisender Boden in einer Ebene des Zustellfahrzeugs vorgesehen sein. So können unterschiedliche Abschnitte desselben Bodens als Fördereinrichtung bzw. Förderelement und als Lagereinrichtung bzw. Lagerpositionen genutzt werden. Die Allseitenräder erlauben es, die Sendungen bedarfsweise entlang von unterschiedlichen Bahnen entlang der entsprechenden Ebene zu transportieren, etwa um die Sendungen an unterschiedliche Lagerpositionen zu übergeben. Dazu ist dann kein weiteres Leitmittel erforderlich. Um die Funktionalität der Allseitenräder besonders effizient ausnutzen zu können, werden diese vorzugsweise in drei unterschiedlichen Umfangsrichtungen angetrieben. Dabei ist es besonders geeignet, wenn die Drehachsen der Allseitenräder sich in einem Winkel von 120° und/oder 60° schneiden und/oder parallel zueinander ausgerichtet sind. Gleichzeitig oder alternativ können die Allseitenräder mit unterschiedlichen Geschwindigkeiten rotieren. Beides kann dazu genutzt werden, die Sendungen auf unterschiedlichen, insbesondere gebogenen, Bahnen entlang des Rollenförderers zu fördern.

Wenn die Sendungen auf einem Teil des, vorzugsweise Allseitenräder aufweisenden, Rollenförderers zwischengelagert werden, der demnach wenigstens eine Lagerposition bildet, können unterschiedliche Teile des Rollenförderers als Förderelement oder als Lagereinrichtung genutzt werden.

Nachfolgend wird die Erfindung anhand einer lediglich ein Ausführungsbeispiel darstellenden Zeichnung näher erläutert. In der Zeichnung zeigt
- Fig. 1: ein erstes erfindungsgemäßes Zustellfahrzeug zur Durchführung des erfindungsgemäßen Verfahrens der Zustellung während des Beladens mit Sendungen in einer schematischen, vertikalen Schnittansicht,
- Fig. 2: das Zustellfahrzeug aus der Fig. 1 in einer schematischen, horizontalen Schnittansicht,
- Fig. 3: das Be- und Entladen des Zustellfahrzeugs aus der Fig. 1 in einer schematischen vertikalen Querschnittsansicht,
- Fig. 4: das Zustellfahrzeug aus der Fig. 1 während einer alternativen Art des Beladens des Zustellfahrzeugs mit Sendungen in der Ansicht gemäß Fig. 1,
- Fig. 5: ein zweites erfindungsgemäßes Zustellfahrzeug zur Durchführung des erfindungsgemäßen Verfahrens der Zustellung während des Beladens mit Sendungen in einer schematischen, vertikalen Schnittansicht,
- Fig. 6: das Zustellfahrzeug aus der Fig. 5 in einer schematischen, horizontalen Schnittansicht und
- Fig. 7: ein Detail eines Förderelements der Fördereinrichtung des Zustellfahrzeugs aus der Fig. 5 in einer perspektivischen Schnittansicht.

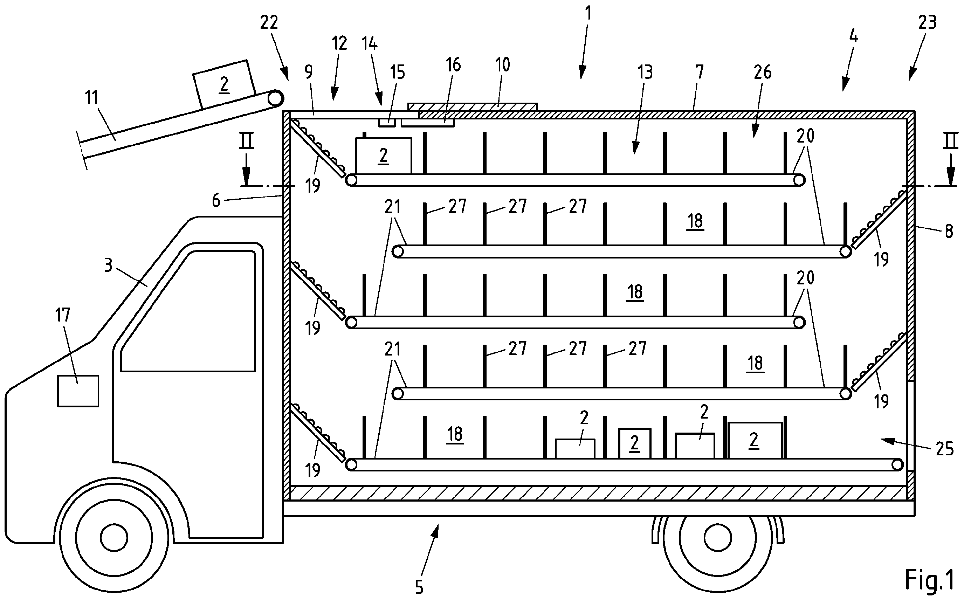

In der Fig. 1 ist ein Zustellfahrzeug 1 zur Zustellung von Sendungen 2 an unterschiedlichen Orten entlang einer Zustellroute dargestellt. Das Zustellfahrzeug 1 weist eine Fahrerkabine 3 und einen Aufbau 4 zur Aufnahme der Sendungen 2 auf. Die Fahrerkabine 3 wäre bedarfsweise entbehrlich, wenn es sich um ein autonom fahrendes Zustellfahrzeug 1 handelt. Dies ist grundsätzlich möglich, aber für die weitere Ausgestaltung des Zustellfahrzeugs 1 und das Verfahren der Zustellung der Sendungen 2 mittels des Zustellfahrzeugs 1 von eher untergeordneter Bedeutung. Bei dem Aufbau 4 des dargestellten und insoweit bevorzugten Zustellfahrzeugs 1 handelt es sich um einen Kofferaufbau mit festen Seitenwänden 5, einer festen Stirnwand 6, einem festen Dach 7 und einer festen, bedarfsweise Flügeltüren zum Betreten und/oder Beladen des Aufbaus aufweisenden, Rückwand 8. Prinzipiell sind jedoch andere Aufbauten denkbar.

Bei dem dargestellten und insoweit bevorzugten Zustellfahrzeug 1 erfolgt die Beladung mit Sendungen 2 für eine Zustelltour bzw. Zustellroute über das Dach 7. Dazu ist in dem Dach 7 eine Öffnung 9 vorgesehen, durch die die Sendungen 2 in den Aufbau 4 gelangen können. Die Öffnung 9 kann durch ein nicht im Einzelnen dargestelltes Verschlusselement 10 verschlossen werden. Das Verschlusselement 10 kann dabei beispielsweise als Klappe oder als Schieber ausgebildet sein. Alternativ oder zusätzlich kann das Verschlusselement 10 elektromotorisch angetrieben geöffnet und geschlossen werden. Dies kann automatisch oder durch den Zusteller initiiert werden.

In der Fig. 1 ist das Beladen des Zustellfahrzeugs 1 mit Sendungen 2 dargestellt, die separat, also bereits vereinzelt, über ein Förderband 11 zur Öffnung 9 im Dach 7 transportiert werden. Vom Ende des Förderbands 11 rutschen oder fallen die Sendungen 2 nacheinander durch die Öffnung 9 in den Aufbau 4 des Zustellfahrzeugs 1 und gelangen dabei in die Aufnahmeeinrichtung 12 des Zustellfahrzeugs 1. Die Aufnahmeeinrichtung 12 des Zustellfahrzeugs 1 ist dabei in einem Anfangsbereich einer Fördereinrichtung 13 zur Förderung der Sendungen 2 vorgesehen und dient der Aufnahme der Sendungen 2 im Zustellfahrzeug 1, während die Fördereinrichtung 13 der Förderung der Sendungen 2 im Zustellfahrzeug 1 dient. Bei dem dargestellten und insoweit bevorzugten Zustellfahrzeug 1 ist der Aufnahmeeinrichtung 12 zugeordnet, wenn nicht in die 12 Aufnahmeeinrichtung integriert, eine Sensoreinrichtung 14 umfassend wenigstens einen Sensor 15, der vorliegend als optischer Sensor 15 ausgebildet ist.

Die nacheinander über die Öffnungen 9 in die Aufnahmeeinrichtung 12 gelangenden Sendungen 2 werden von der Fördereinrichtung 13 nacheinander aus der bzw. von der Aufnahmeeinrichtung 12 wegtransportiert. Dabei werden die Sendungen 2 von der Fördereinrichtung 13 an dem wenigstens einen Sensor 15 der Sensoreinrichtung 14 vorbeigeführt, wobei von dem Sensor 15 auf den Sendungen 2 aufgebrachte Barcodes erfasst und die in den Barcodes enthaltenden Zustellinformationen der Sendungen 2 ausgelesen werden. Die Zustellinformationen enthalten beispielsweise die Ortsangaben der Orte, an denen die Zustellung der Sendungen 2 bewirkt werden sollen. Die Zustellinformationen werden entweder von einer Steuereinrichtung 16 ermittelt oder an eine Steuereinrichtung 16 weitergeleitet. Anhand der Zustellinformationen aller Sendungen 2 kann eine für die Zustellung der Sendungen 2 besonders geeignete Zustellroute ermittelt werden, was ebenfalls von der Steuereinrichtung 16 bewerkstelligt werden kann. Die Festlegung der Zustellroute kann aber auch von einer Navigationseinrichtung 17 durchgeführt werden, welche mit der Steuereinrichtung 16 verbunden ist und die aktuelle Verkehrssituation berücksichtigen kann. Die Navigationseinrichtung 17 leitet dann den Zusteller entlang der Zustellroute und weist den Zusteller auch auf die jeweiligen Orte der Zustellung der vom Zustellfahrzeug 1 geladenen Sendungen 2 hin. Bei einem autonom fahrenden Zustellfahrzeug 1 wird die Zustellroute direkt zum Leiten des Zustellfahrzeugs 1 nacheinander zu den Orten der Zustellung der zuzustellenden Sendungen 2 genutzt.

Die von einer Fördereinrichtung 13 geförderten Sendungen 2 werden bei dargestellten und insoweit bevorzugten Verfahren zur Zustellung von Sendungen 2 mit dem Zustellfahrzeug 1 nacheinander bis jeweils zur letzten freien Lagerposition 18 gefördert. Dazu sind im Zustellfahrzeug 1 Förderelemente 19,20 vorgesehen, die eine Reihe von Ebenen 21 im Zustellfahrzeug 1 definieren. Die einzelnen Ebenen 21 sind an der Vorderseite 22 oder der Rückseite 23 des Aufbaus 4 über Rollenförderer 19 miteinander verbunden. In den einzelnen Ebenen sind Kippschalenförderer 20 vorgesehen, die ähnlich eines Bandförderers in eine Reihe und umlaufend angeordnete Kippschalen 24 aufweisen. Von jeder einzelnen Kippschale 24 kann eine Sendung 2 aufgenommen werden, die dann in der Transportrichtung des Kippschalenförderers 20 weitertransportiert wird. Bedarfsweise werden die Sendungen 2 von dem Kippschalenförderer 20 am Ende der entsprechenden Ebene 21 abgeworfen und von einem dort vorgesehenen Rollenförderer 19 oder einer Rutsche zum Kippschalenförderer 20 der nächsten Ebene 21 transportiert. Dort wird die entsprechende Sendung 2 wieder von einer Kippschale 24 des dort vorgesehenen Kippschalenförderers 20 aufgenommen und in der Transportrichtung dieses Kippschalenförderers 20 weitertransportiert. Die Transportrichtungen der Kippschalenförderer 20 auf zwei aufeinanderfolgenden Ebenen 21 sind einander entgegen gerichtet. Transportiert ein Kippschalenförderer 20 die Sendungen 2 in Richtung der Rückseite 23 des Zustellfahrzeugs 1, so transportiert der nachfolgende Kippschalenförderer 20 die Sendungen 2 in Richtung der Stirnwand 6 des Aufbaus 4 des Zustellfahrzeugs 1. Die Anzahl der in dem Zustellfahrzeug 1 vorgesehenen Ebenen 21 kann abhängig von der maximal zulässigen Größe der zuzustellenden Sendungen 2, von der Art des Zustellfahrzeugs 1 und von der Größe des Aufbaus 4 des Zustellfahrzeugs 1 abhängig gemacht werden.

Die Sendungen 2 werden bei einem bevorzugten Verfahren soweit in Richtung der Abgabeeinrichtung 25 transportiert, wie noch freie Lagerpositionen 18 zur Verfügung stehen. Die der Abgabeeinrichtung 25 am nächsten gelegene Lagerposition 18 oder Lagerpositionen 18 der Lagereinrichtung 26 wird/werden zuerst belegt. Die nächsten Sendungen 2 werden dann jeweils den letzten freien Lagerpositionen 26 zugeführt.

Beim dargestellten und insoweit bevorzugten Zustellfahrzeug 1 erstreckt sich die Lagereinrichtung 26 wenigstens im Wesentlichen entlang der Fördereinrichtung 13. Die Lagereinrichtung 13 ist dabei ebenfalls auf den verschiedenen Ebenen 21 der Fördereinrichtung 13 verteilt vorgesehen.

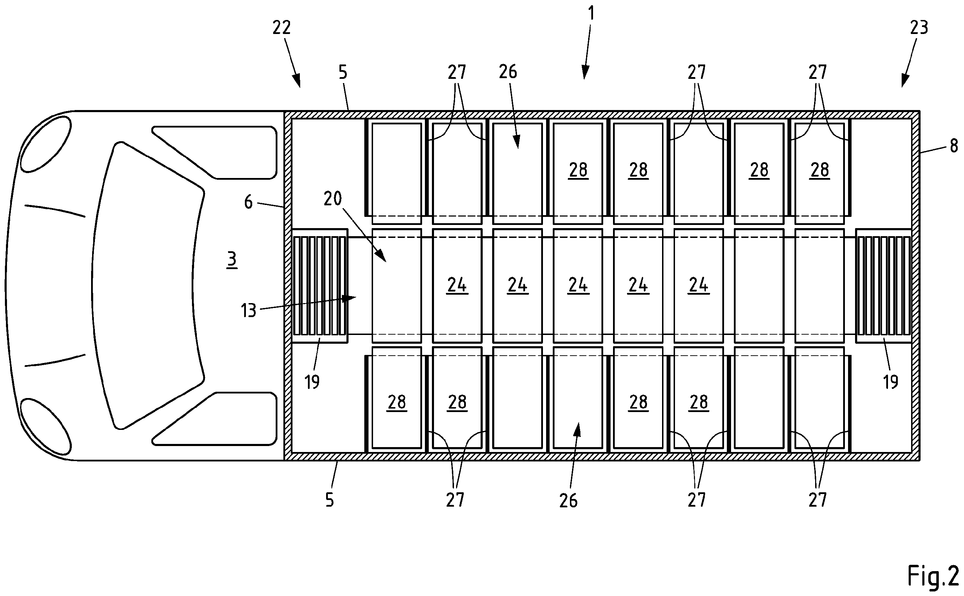

Eine Ebene des Zustellfahrzeugs 1 ist in der Fig. 2 dargestellt. In der Mitte der Ebene 21 erstreckt sich in Längsrichtung des Zustellfahrzeugs 1 der Kippschalenförderer 20. An den jeweiligen Längsenden des Kippschalenförderers 20 sind die Rollenförderer 19 vorgesehen, die die Verbindung einer Ebene 21 mit der darunter vorgesehenen Ebene 21 gewährleisten. Zu beiden Seiten des Kippschalenförderers 20 sind Lagerpositionen 18 für die Sendungen 2 vorgesehen. Zur Aufnahme der Sendungen 2 in den Lagerpositionen 18 weist die Lagereinrichtung 26 Kippschalen 24 auf. Bei dem dargestellten und insoweit bevorzugten Zustellfahrzeug 1 sind zwischen den einzelnen Kippschalen 24 einer Ebene 21 Trennmittel 27 vorgesehen, die ein versehentliches Verrutschen von Sendungen 2 von einer Kippschale 24 in die angrenzende Kippschale 24 verhindern, etwa für den Fall, dass das Zustellfahrzeug 1 scharf bremst oder einen steilen Streckenabschnitt passiert.

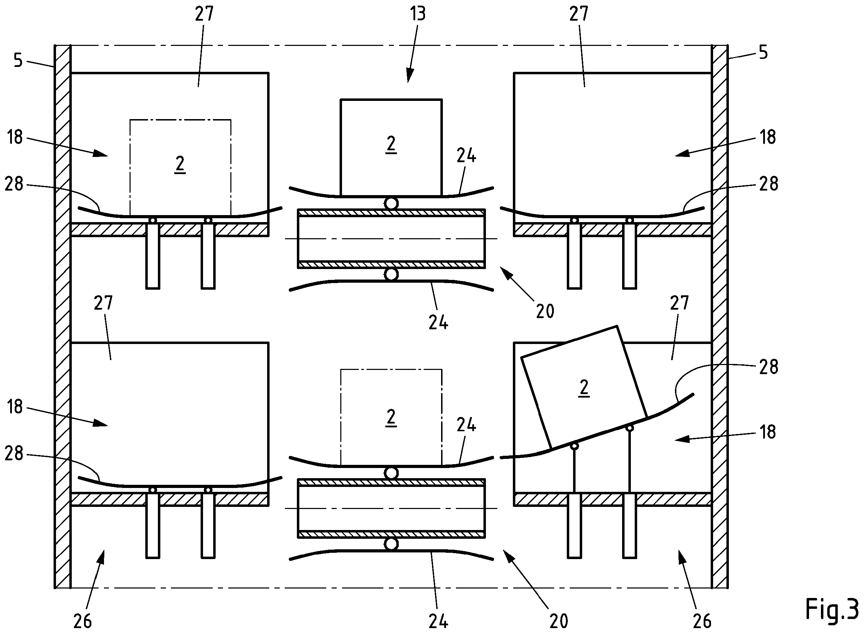

In der Fig. 3 ist schematisch dargestellt, wie die Sendungen 2 von den Kippschalen 24 des Kippschalenförderers 20 an die Kippschalen 24 der Lagereinrichtung 26 abgegeben werden. Zudem ist schematisch dargestellt, wie die Sendungen 2 wieder von den Kippschalen 24 der Lagereinrichtung 26 an die Kippschalen 24 der Fördereinrichtung 13 abgegeben werden. Die Kippschalen 24 der Kippschalenförderer 20 können zu beiden Seiten gekippt werden, wobei die Kippschalen 24 dann so schräg gestellt werden, dass die Sendungen 2 zur Seite in die Kippschalen 28 der Lagereinrichtung 26 rutschen. Wenn Sendungen 2 von den Kippschalen 28 der Lagereinrichtung 26 wieder zurück an die Kippschalen 24 der Fördereinrichtung 13 übergeben werden sollen, werden die entsprechenden Kippschalen 28 der Lagereinrichtung 26 schräg gestellt, so dass die Sendungen 2 in die angrenzende Kippschale 24 der Fördereinrichtung 13 rutschen. Die Sendungen 2 können sodann mittels der Fördereinrichtung 13 bzw. mit den Förderelementen 19,20 der Fördereinrichtung 13 bis zur Abgabeeinrichtung 25 transportiert werden. Dort angelangt, können die Sendungen 2 beispielsweise vom Zusteller entnommen und am Ort der Zustellung zugestellt werden.

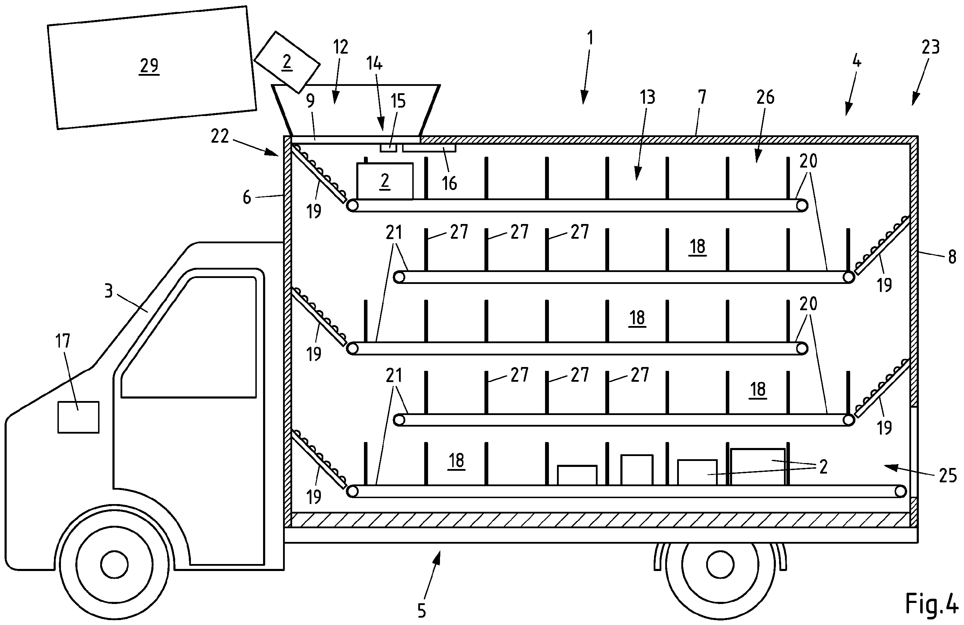

In der Fig. 4 ist das Zustellfahrzeug 1 aus Fig. 1 während einer alternativen Art des Beladens mit Sendungen 2 dargestellt. Anstatt die Sendungen 2 dem Zustellfahrzeug 1 einzeln und nacheinander zuzuführen, werden die Sendungen 2 aus einem Rollwagen 29 durch die Öffnung 9 im Dach 7 in das Zustellfahrzeug 1, insbesondere in die Aufnahmeeinrichtung 12 gekippt. Die entsprechende Ausgestaltung der Aufnahmeeinrichtung 12 oder eine spezielle Vereinzelungseinrichtung 30 kann dann dafür Sorge tragen, dass die in die Aufnahmeeinrichtung 12 gekippten Sendungen 2 vereinzelt werden, bevor die Sendungen 2 an dem wenigstens einen Sensor 15 der Sensoreinrichtung 14 vorbeigeführt werden. Auf diese Weise wird sichergestellt, dass die Zustellinformationen der Sendungen 2 zuverlässig erfasst werden. Die weitere Handhabung der Sendungen 2 erfolgt dann, wie dies zuvor bereits beschrieben worden ist.

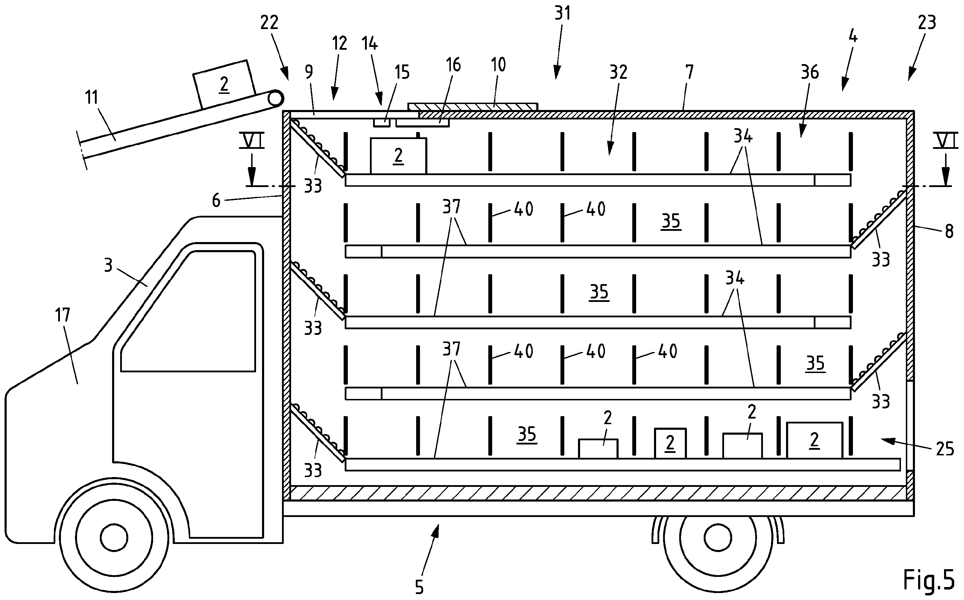

In der Fig. 5 ist ein alternatives Zustellfahrzeug 31 dargestellt, das prinzipiell auf die beiden zuvor beschriebenen Weisen mit Sendungen 2 beladen werden kann. Das Zustellfahrzeug unterscheidet sich im Wesentlichen lediglich in Bezug auf die nachfolgend näher beschriebenen Einrichtungen von dem Zustellfahrzeug aus Fig. 1, so dass gleiche Bauteile gleiche Bezugszeichen aufweisen. Auch bei dem Zustellfahrzeug 31 der Fig. 5 weist die Fördereinrichtung 32 mehrere Förderelemente 33,34 auf, die unterschiedliche übereinander angeordnete Ebenen 21 definieren. Die Sendungen 2 werden von oben nach unten über die verschiedenen Ebenen 21 zur Abgabeeinrichtung 25 transportiert und auf diesem Weg vorzugsweise in einer Lagerposition 35 der Lagereinrichtung 36 zwischengespeichert. Im Unterschied zu dem Zustellfahrzeug 1 gemäß Fig. 1 sind in den Ebenen 21 des Zustellfahrzeugs 31 gemäß Fig. 5 keine Kippschalenförderer 20 vorgesehen und es sind in der Lagereinrichtung 36 auch keine Kippschalen 28 zur Aufnahme der Sendungen 2 vorgesehen. Die Ebenen 21 werden durch sogenannte omnidirektionale Böden 37 gebildet, die sowohl das Förderelement 34 der entsprechenden Ebene 21 als auch die Lagerpositionen 35 der Lagereinrichtung 36 der entsprechenden Ebene 21 bereitstellen.

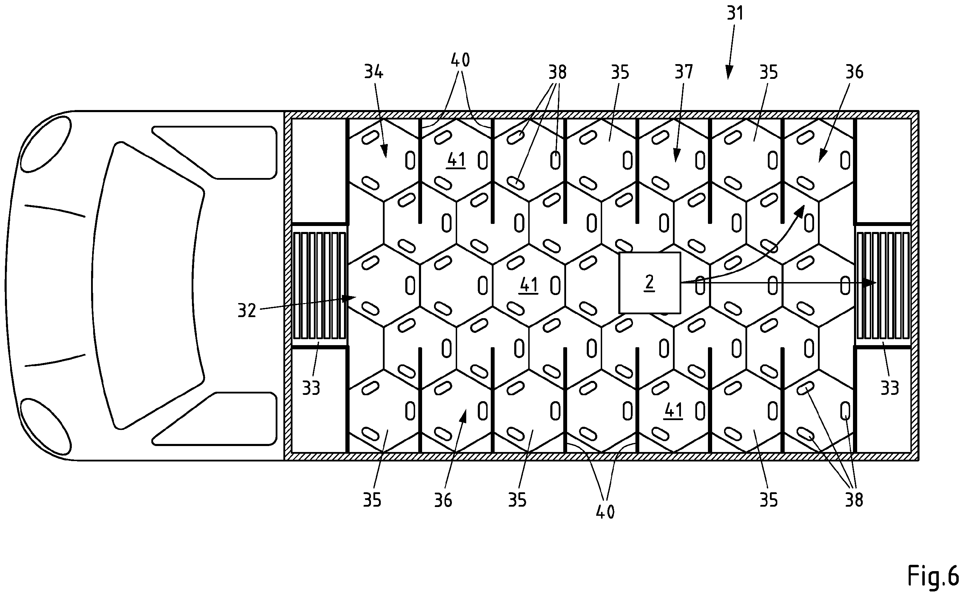

Die omnidirektionalen Böden 37 weisen, wie insbesondere in der Fig. 6 dargestellt ist, Allseitenräder 38 auf, die auch als omnidirektionale Räder 38 bezeichnet werden. Die omnidirektionalen Räder 38 weisen über ihren Umfang verteilt Rollen 39 auf, deren Drehachsen senkrecht zu den Drehachsen der Allseitenräder 38 ausgerichtet sind. In der Umfangsrichtung der omnidirektionalen Räder 38 können die Sendungen 2 also von den omnidirektionalen Rädern 38 transportiert werden. Senkrecht dazu können die omniidirektionalen Räder 38 die Sendungen 2 zwar nicht transportieren. Allerdings verhindern die omnidirektionalen Räder 38 den Transport in diese Richtung nicht. Die omnidirektionalen Räder 38 der omnidirektionalen Böden 37 weisen Drehachsen auf, die in unterschiedliche Richtungen weisen und zudem parallel zum jeweiligen omnidirektionalen Boden 37 sind. Zudem werden die omnidirektionalen Räder 38 einzeln und unabhängig voneinander über eine Steuerung angetrieben und wird bedarfsweise der Transport der Sendungen 2 entlang der omnidirektionalen Böden 37 über wenigstens einen, insbesondere einen optischen, Sensor überwacht. Daher kann jede Sendung 2 mit den omnidirektionalen Rädern 38 in eine beliebige Richtung und nahezu entlang jeder beliebigen Bahn über den omnidirektionalen Boden 37 transportiert werden.

Die Sendungen 2 können beispielsweise geradlinig über den omnidirektionalen Boden 37 transportiert werden, um Sendungen 2 der nächsten Ebene 21 zuzuführen. Die Sendungen 2 können aber auch auf bestimmte Lagerpositionen 18 bewegt werden, die von einem Teil des omnidirektionalen Bodens 37 gebildet werden. Dies hat den Vorteil, dass keine komplizierte und aufwendige Übergabe der Sendung 2 von der Fördereinrichtung 32 an die Lagerposition 35 erfolgen muss. Damit die Sendungen 2 während der Zustelltour nicht verrutschen, können die Sendungen 2 unmittelbar angrenzend zueinander in entsprechenden Lagerpositionen 35 gelagert werden. In diesem Zusammenhang bietet es sich an, wenn von dem wenigstens einen Sensor 15 der wenigstens einen Sensoreinrichtung 14 neben der Zustellinformation noch eine Lagerinformation erfasst wird, die den für die Lagerung der Sendung 2 benötigten Platz beschreibt. Wenn das Zustellfahrzeug 31 teilweise entladen wird, insbesondere wenn die Reihenfolge des Zustellens der Sendungen 2 bei der Zuweisung der Sendungen 2 zu Lagerpositionen 35 nicht berücksichtigt wird, können die Sendungen 2 im teilentladenen Zustellfahrzeug 31 unter Umständen dennoch versehentlich verrutschen. Um dies zu vermeiden, können auch bei omnidirektionalen Böden 37 wie bei dem in der Fig. 1 dargestellten Zustellfahrzeug 1 sogenannte Trennmittel 40 vorgesehen sein, welche angrenzende Lagerpositionen 18,35 voneinander trennen.

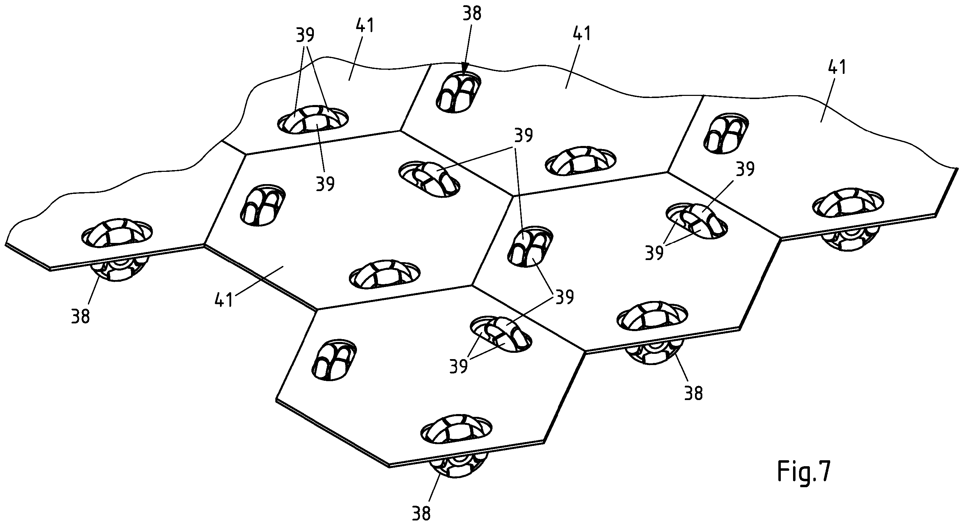

Bei dem in der Fig. 5 dargestellten und insoweit bevorzugten Zustellfahrzeug 31 sind die omnidirektionalen Böden 37 modular aus einer Vielzahl gleichartiger Module 41 aufgebaut, wie sie in der Fig. 7 schematisch dargestellt sind. Jedes der Module 41 weist drei unterschiedliche Allseitenräder 38 auf, deren Drehachsen in einer, oder wenigstens parallel zu einer, Ebene angeordnet und um jeweils 120° und/oder 60° zueinander versetzt sind. Jedes der Allseitenräder 38 kann in zwei entgegengesetzte Richtungen sowie in mehreren unterschiedlichen Geschwindigkeiten angetrieben werden. Rund um den Umfang sind zwei Reihen von Rollen 39 angeordnet, und zwar immer abwechselnd zueinander. Die Drehachsen der Rollen 39 sind senkrecht zur Umfangsrichtung des Allseitenrads 38 ausgerichtet. Sendungen 2, die gleichzeitig auf mehreren dieser Allseitenräder 38 aufliegen, können eine Bewegungskomponente in einer nahezu beliebigen Richtung parallel zur Ebene des omnidirektionalen Bodens 37 aufgeprägt bekommen.

### Bezugszeichenliste

- 1: Zustellfahrzeug
- 2: Sendung
- 3: Fahrerkabine
- 4: Aufbau
- 5: Seitenwand
- 6: Stirnwand
- 7: Dach
- 8: Rückwand
- 9: Öffnung
- 10: Verschlusselement
- 11: Förderband
- 12: Aufnahmeeinrichtung
- 13: Fördereinrichtung
- 14: Sensoreinrichtung
- 15: Sensor
- 16: Steuereinrichtung
- 17: Navigationseinrichtung
- 18: Lagerposition
- 19: Förderelement
- 20: Förderelement
- 21: Ebene
- 22: Vorderseite
- 23: Rückseite
- 24: Kippschale
- 25: Abgabeeinrichtung
- 26: Lagereinrichtung
- 27: Trennmittel
- 28: Kippschale
- 29: Rollwagen
- 30: Vereinzelungseinrichtung
- 31: Zustellfahrzeug
- 32: Fördereinrichtung
- 33: Förderelement
- 34: Förderelement
- 35: Lagerposition
- 36: Lagereinrichtung
- 37: omnidirektionaler Boden
- 38: Allseitenrad
- 39: Rolle
- 40: Trennmittel
- 41: Modul

## Patentansprüche

1. Zustellfahrzeug (1,31) zur Zustellung von Sendungen (2) an unterschiedlichen Orten einer Zustellroute, mit wenigstens einer Aufnahmeeinrichtung (12) zum Aufnehmen der Sendungen (2), mit wenigstens einer Sensoreinrichtung (14) zum separaten Erfassen von Zustellinformationen der über die Aufnahmeeinrichtung (12) aufgenommenen Sendungen (2), mit wenigstens einer Lagereinrichtung (26,36) zum Lagern der aufgenommenen Sendungen (2) während der Zustellung anderer Sendungen (2) und mit wenigstens einer Fördereinrichtung (13,32) zum Fördern der aufgenommenen Sendungen (2) von der Aufnahmeeinrichtung (12) zu Lagerpositionen (18,35) der Lagereinrichtung (26,36) und von den Lagerpositionen (18,35) der Lagereinrichtung (26,36) zu einer Abgabeeinrichtung (25) zum Abgeben der Sendungen (2) am jeweiligen Ort der Zustellung der Sendungen (2).

2. Zustellfahrzeug nach Anspruch 1,
**dadurch gekennzeichnet, dass**
die Sensoreinrichtung (14) wenigstens einen optischen Sensor (15) aufweist und/oder dass die Sendungen (2) Zustellinformationen in Form von 2D-Barcodes und/oder 3D-Barcodes, vorzugsweise an mehreren Seiten der Sendungen (2), aufweisen und/oder dass die Aufnahmeeinrichtung (12) eine im Dach (7) des Zustellfahrzeugs (1,31) vorgesehene Öffnung (9) zum Aufnehmen der Sendungen (2) über das Dach (7) aufweist und/oder dass die Aufnahmeeinrichtung (12) zum Zuführen der Sendungen (2) über eine Seitenwand (5) und/oder über die Rückwand (8) einem oberen Randbereich einer Seitenwand (5) und/oder einem oberen Randbereich der Rückwand (8) zugeordnet ist.

3. Zustellfahrzeug nach Anspruch 1 oder 2,
**dadurch gekennzeichnet, dass**
die Fördereinrichtung (13,32) zum, vorzugsweise stufenweisen, Fördern der Sendungen (2) von einer oberen Aufnahmeposition in eine untere Abgabeposition ausgebildet ist und dass, vorzugsweise, die Fördereinrichtung (13,32) mehrere übereinander angeordnete, insbesondere über Rutschen oder Rollenförderer verbundene, Förderebenen (19,20,33,34) definiert.

4. Zustellfahrzeug nach einem der Ansprüche 1 bis 3,
**dadurch gekennzeichnet, dass**
die Fördereinrichtung (13,32), insbesondere auf jeder Ebene (21) der Fördereinrichtung (13,32), wenigstens ein Förderband, wenigstens einen Kippschalenförderer (20) und/oder wenigstens einen, vorzugsweise Allseitenräder (38) aufweisenden, Rollförderer (19,34) umfasst und/oder dass die Lagereinrichtung (26,36) wenigstens teilweise von dem Rollenförderer (19,34) gebildet wird und/oder Kippschalen (28) zum Übergeben von zwischengespeicherten Sendungen (2) an die Fördereinrichtung (13) aufweist und/oder dass die Allseitenräder (38) in, vorzugsweise wenigstens drei, unterschiedlichen Ausrichtungen angeordnet sind und/oder dass die Allseitenräder (38) in unterschiedliche Richtungen und/oder mit unterschiedlichen Umfangsgeschwindigkeiten angetrieben sind.

5. Zustellfahrzeug nach einem der Ansprüche 1 bis 4,
**dadurch gekennzeichnet, dass**
der Fördereinrichtung (13,32) und/oder der Lagereinrichtung (26,36) wenigstens Leitmittel zum Abgeben der Sendungen (2) von der Fördereinrichtung (13,32) an bestimmte Lagerpositionen (18,35) der Lagereinrichtung (26,36) und/oder von bestimmten Lagerpositionen (18,35) der Lagereinrichtung (26,36) an die Fördereinrichtung (13,32) zugeordnet sind.

6. Zustellfahrzeug nach einem der Ansprüche 1 bis 5,
**dadurch gekennzeichnet, dass**
eine Steuereinrichtung (16) zum Steuern der Fördereinrichtung (13,32) zur Lagerung der Sendungen (2) in bestimmten Lagerpositionen (18,35) der Lagereinrichtung (26,36) vorgesehen ist und dass, vorzugsweise, die Steuereinrichtung (16) zur Lagerung der Sendungen (2) der Reihe nach und/oder anhand von mittels wenigstens einer Sensoreinrichtung (14) erfassten Lagerinformation ausgebildet ist.

7. Zustellfahrzeug nach einem der Ansprüche 1 bis 6,
**dadurch gekennzeichnet, dass**
die wenigstens eine Sensoreinrichtung (14) mit einer Navigationseinrichtung (17) zur Ermittlung der Zustelltour anhand der Zustellinformationen der Sendungen (2) verbunden ist und/oder dass eine Ortungseinrichtung zum Fördern von Sendungen (2) zur Abgabeeinrichtung (25) anhand der Position des Zustellfahrzeugs (1,31) und der Zustellinformationen der Sendungen (2) vorgesehen ist.

8. Verfahren zum Zustellen von Sendungen (2) an unterschiedlichen Orten entlang einer Zustellroute mit einem Zustellfahrzeug (1,31), vorzugsweise nach einem der Ansprüche 1 bis 7,
- bei dem die zuzustellenden Sendungen (2) unsortiert über wenigstens eine Aufnahmeeinrichtung (12) des Zustellfahrzeugs (1,31) an das Zustellfahrzeug (1,31) übergeben werden,
- bei dem Zustellinformationen der aufgenommenen Sendungen (2) separat von wenigstens einer Sensoreinrichtung (14) erfasst werden,
- bei dem die Sendungen (2) von wenigstens einer Fördereinrichtung (13,32) zu Lagerpositionen (18,35) wenigstens einer Lagereinrichtung (26,36) gefördert werden,
- bei dem die Sendungen (2) in den Lagerpositionen (18,35) zwischengelagert werden,
- bei dem die Sendungen (2) von den Lagerpositionen (18,35) von der Fördereinrichtung (13,32) zu wenigstens einer Abgabeeinrichtung (25) gefördert werden und
- bei dem an unterschiedlichen Orten der Zustellroute die zur Abgabeeinrichtung (25) geförderten Sendungen (2) abgegeben werden.

9. Verfahren nach Anspruch 8,
bei dem die, insbesondere als 2D-Barcode und/oder 3D-Barcode, auf den Sendungen (2) vorgesehenen Zustellinformationen und/oder Lagerinformationen über wenigstens einen, vorzugsweise optischen, Sensor (15) einer Sensoreinrichtung (14) erfasst und den entsprechenden Sendungen (2) und/oder den Lagerpositionen (18,35) der entsprechenden Sendungen (2) zugeordnet gespeichert werden und/oder
- bei dem die Zustellroute anhand der Zustellinformationen ermittelt wird und, vorzugsweise, eine Navigationseinrichtung (17) das Zustellfahrzeug (1,31) entlang der Zustellroute nacheinander zu den Orten der Abgabe der Sendungen (2) leitet.

10. Verfahren nach Anspruch 8 oder 9,
- bei dem wenigstens eine Ortungseinrichtung die aktuelle Position des Zustellfahrzeugs (1,31) entlang der Zustellroute ermittelt und
- bei dem anhand der aktuellen Position des Zustellfahrzeugs (1,31) und, vorzugsweise, anhand der Zustellpositionen ermittelten Zustellroute das wenigstens eine als nächstes abzugebende Sendung (2) und/oder die wenigstens eine Lagerposition (18,35) der wenigstens einen als nächstes abzugebenden Sendung (2) ermittelt wird.

11. Verfahren nach einem der Ansprüche 8 bis 10,
- bei dem wenigstens eine als nächstes abzugebende Sendung (2) von der Lagerposition (18,35) an die wenigstens eine Fördereinrichtung (13,32) abgegeben wird und
- bei dem, vorzugsweise, die Fördereinrichtung (13,32) die wenigstens eine als nächstes abzugebende Sendung (2) zur Abgabeeinrichtung (25) fördert.

12. Verfahren nach einem der Ansprüche 8 bis 11,
bei dem die Sendungen (2) der Reihe nach und/oder anhand von den Sendungen (2) zugeordneten Lagerinformationen an Lagerpositionen (18,35) der wenigstens einen Lagereinrichtung (26,36) übergeben werden.

13. Verfahren nach einem der Ansprüche 8 bis 12,
- bei dem die Sendungen (2) über eine Öffnung (9) im Dach (7), im oberen Randbereich einer Seitenwand (5) und/oder im oberen Randbereich der Rückwand (8) der Aufnahmeeinrichtung (12) zugeführt werden und/oder
- bei dem die Sendungen (2) nacheinander über eine Fördereinrichtung, insbesondere ein Förderband (11), und/oder als eine Reihe von Sendungen (2) gemeinsam in die Aufnahmeeinrichtung (12) geschüttet werden und/oder
- bei dem die Sendungen (2) wenigstens teilweise, insbesondere mittels einer Vereinzelungseinrichtung, (30) in der Aufnahmeeinrichtung (12) vereinzelt und anschließend vereinzelt der Sensoreinrichtung (14) zur Ermittlung der Zustellinformationen und/oder Lagereinformationen zugeführt werden.

14. Verfahren nach einem der Ansprüche 8 bis 13,
- bei dem die Sendungen (2) über wenigstens eine Fördereinrichtung (13,32) in Form eines Förderbands, eines Kippschalenförderers (20) und/oder einen, vorzugsweise Allseitenräder (38) aufweisenden, Rollenförderer (19,33,34), insbesondere über wenigsten eine Ebene (21), vorzugsweise unterschiedlichen Ebenen (21), gefördert werden und,
- bei dem, vorzugsweise, die Sendungen (2) über Rutschen und/oder Rollenförderer (19,33) zwischen wenigstens zwei, insbesondere benachbarten Ebenen (21), gefördert werden.

15. Verfahren nach Anspruch 14,
- bei dem die Sendungen (2) entlang einer Ebene (21) mittels eines Allseitenräder (38) aufweisenden Rollenförderers (34) nacheinander in unterschiedliche Richtungen, vorzugsweise entlang einer gekrümmten Bahn, transportiert werden und, vorzugsweise, die Allseitenräder (38) beim Transportieren der Sendungen (2) in drei unterschiedliche Richtungen und/oder in unterschiedlichen Geschwindigkeiten angetrieben werden und/oder
bei dem die Sendungen (2) auf als Teil des, vorzugsweise Allseitenräder (38) aufweisenden, Rollenförderers (34) ausgebildeten Lagerpositionen (35) zwischengelagert werden.

## Claims

1. Delivery vehicle (1, 31) for delivering consignments (2) at different locations on a delivery route, having at least one receiving device (12) for receiving the consignments (2), having at least one sensor device (14) for separately capturing delivery information for the consignments (2) received via the receiving device (12), having at least one storage device (26, 36) for storing the received consignments (2) during the delivery of other consignments (2), and having at least one conveying device (13, 32) for conveying the received consignments (2) from the receiving device (12) to storage positions (18, 35) of the storage device (26, 36) and from the storage positions (18, 35) of the storage device (26, 36) to a dispensing device (25) for dispensing the consignments (2) at the particular location for delivery of the consignments (2).

2. Delivery vehicle according to Claim 1,
**characterized in that**
the sensor device (14) has at least one optical sensor (15) and/or **in that** the consignments (2) have delivery information in the form of 2D barcodes and/or 3D barcodes, preferably on several sides of the consignments (2) and/or **in that** the receiving device (12) has an opening (9), provided in the roof (7) of the delivery vehicle (1, 31), for receiving the consignments (2) via the roof (7), and/or **in that**, in order for the consignments (2) to be fed via a side wall (5) and/or via the rear wall (8), the receiving device (12) is assigned to an upper peripheral region of a side wall (5) and/or to an upper peripheral region of the rear wall (8).

3. Delivery vehicle according to Claim 1 or 2,
**characterized in that**
the conveying device (13, 32) is configured to convey the consignments (2), preferably in steps, from an upper receiving position into a lower dispensing position, and **in that**, preferably, the conveying device (13, 32) defines a plurality of conveying levels (19, 20, 33, 34) that are arranged one above another and are connected in particular via chutes or roller conveyors.

4. Delivery vehicle according to one of Claims 1 to 3,
**characterized in that**
the conveying device (13, 32) comprises, in particular on each level (21) of the conveying device (13, 32), at least one conveyor belt, at least one tilt tray conveyor (20) and/or at least one roller conveyor (19, 34), preferably having omni wheels (38), and/or **in that** the storage device (26, 36) is formed at least in part by the roller conveyor (19, 34) and/or has tilt trays (28) for transferring temporarily stored consignments (2) to the conveying device (13) and/or **in that** the omni wheels (38) are arranged in, preferably at least three, different orientations and/or **in that** the omni wheels (38) are driven in different directions and/or at different circumferential speeds.

5. Delivery vehicle according to one of Claims 1 to 4,
**characterized in that**
the conveying device (13, 32) and/or the storage device (26, 36) are assigned at least one guiding means for dispensing the consignments (2) from the conveying device (13, 32) to particular storage positions (18, 35) of the storage device (26, 36) and/or from particular storage positions (18, 35) of the storage device (26, 36) to the conveying device (13, 32).

6. Delivery vehicle according to one of Claims 1 to 5,
**characterized in that**
a control device (16) for controlling the conveying device (13, 32) so that the consignments (2) are stored in particular storage positions (18, 35) of the storage device (26, 36) is provided, and **in that**, preferably, the control device (16) is configured so that the consignments (2) are stored in order and/or on the basis of storage information captured by means of at least one sensor device (14).

7. Delivery vehicle according to one of Claims 1 to 6,
**characterized in that**
the at least one sensor device (14) is connected to a navigation device (17) for determining the delivery round on the basis of the delivery information for the consignments (2) and/or **in that** a positioning device for conveying consignments (2) to the dispensing device (25) on the basis of the position of the delivery vehicle (1, 31) and the delivery information for the consignments (2) is provided.

8. Method for delivering consignments (2) at different locations along a delivery route with a delivery vehicle (1, 31), preferably according to one of Claims 1 to 7,
- in which the consignments (2) to be delivered are transferred to the delivery vehicle (1, 31) in an unsorted manner via at least one receiving device (12) of the delivery vehicle (1, 31),
- in which delivery information for the received consignments (2) is captured separately by at least one sensor device (14),
- in which the consignments (2) are conveyed to storage positions (18, 35) of at least one storage device (26, 36) by at least one conveying device (13, 32),
- in which the consignments (2) are temporarily stored in the storage positions (18, 35),
- in which the consignments (2) are conveyed from the storage positions (18, 35) to at least one dispensing device (25) by the conveying device (13, 32), and
- in which the consignments (2) conveyed to the dispensing device (25) are dispensed at different locations on the delivery route.

9. Method according to Claim 8,
in which the delivery information and/or storage information, provided on the consignments (2), in particular as a 2D barcode and/or 3D barcode, is captured via at least one, preferably optical, sensor (15) of a sensor device (14) and stored in a manner assigned to the corresponding consignments (2) and/or to the storage positions (18, 35) of the corresponding consignments (2), and/or
- in which the delivery route is determined on the basis of the delivery information and, preferably, a navigation device (17) guides the delivery vehicle (1, 31) along the delivery route successively to the locations at which the consignments (2) are dispensed.

10. Method according to Claim 8 or 9,
- in which at least one positioning device determines the current position of the delivery vehicle (1, 31) along the delivery route, and
- in which, on the basis of the current position of the delivery vehicle (1, 31) and, preferably, of the delivery route determined on the basis of the delivery positions, the at least one consignment (2) to be dispensed next and/or the at least one storage position (18, 35) of the at least one consignment (2) to be dispensed next is determined.

11. Method according to one of Claims 8 to 10,
- in which at least one consignment (2) to be dispensed next is dispensed from the storage position (18, 35) to the at least one conveying device (13, 32), and
- in which, preferably, the conveying device (13, 32) conveys the at least one consignment (2) to be dispensed next to the dispensing device (25).

12. Method according to one of Claims 8 to 11,
in which the consignments (2) are transferred to storage positions (18, 35) of the at least one storage device (26, 36) in order and/or on the basis of storage information assigned to the consignments (2).

13. Method according to one of Claims 8 to 12,
- in which the consignments (2) are fed to the receiving device (12) via an opening (9) in the roof (7), in the upper peripheral region of a side wall (5) and/or in the upper peripheral region of the rear wall (8) and/or
- in which the consignments (2) are poured into the receiving device (12) successively via a conveying device, in particular a conveyor belt (11), and/or jointly as a series of consignments (2) and/or
- in which the consignments (2) are separated out at least partially, in particular by means of a separating device (30), in the receiving device (12) and subsequently fed separately to the sensor device (14) in order for the delivery information and/or storage information to be captured.

14. Method according to one of Claims 8 to 13,
- in which the consignments (2) are conveyed via at least one conveying device (13, 32) in the form of a conveyor belt, a tilt tray conveyor (20) and/or a roller conveyor (19, 33, 34), preferably having omni wheels (38), in particular over at least one level (21), preferably over different levels (21) and,
- in which, preferably, the consignments (2) are conveyed between at least two, in particular adjacent levels (21) via chutes and/or roller conveyors (19, 33).

15. Method according to Claim 14,
- in which the consignments (2) are transported successively along a level (21) in different directions, preferably along a curved path, by means of a roller conveyor (34) having omni wheels (38) and, preferably, the omni wheels (38) are driven in three different directions and/or at different speeds while the consignments (2) are being transported and/or in which the consignments (2) are temporarily stored in storage positions (35) configured as part of the roller conveyor (34), preferably having omni wheels (38).

## Revendications

1. Véhicule de livraison (1,31) pour la livraison d'envois (2) à différents endroits d'un itinéraire, avec au moins un dispositif de réception (12) pour la réception des envois (2), avec au moins un dispositif capteur (14) pour la saisie séparée des informations de livraison des envois (2) reçus par le dispositif de réception (12), avec au moins un dispositif de stockage (26, 36) pour le stockage des envois (2) reçus pendant la livraison d'autres envois (2) et avec au moins un dispositif de transport (13, 32) pour le transport des envois (2) reçus depuis le dispositif de réception (12) vers les positions de stockage (18, 35) du dispositif de stockage (26, 36) et des positions de stockage (18, 35) du dispositif de stockage (26, 36) vers un dispositif de distribution (25) pour la distribution des envois (2) à l'endroit respectif de livraison des envois (2).

2. Véhicule de livraison selon la revendication 1,
**caractérisé en ce que** le dispositif capteur (14) présente au moins un capteur optique (15) et/ou **en ce que** les envois (2) présentent des informations de livraison sous forme de codes-barres 2D et/ou de codes-barres 3D, de préférence sur plusieurs côtés des envois (2), et/ou **en ce que** le dispositif de réception (12) présente une ouverture (9) prévue dans le toit (7) du véhicule de livraison (1, 31) pour la réception des envois (2) par le toit (7) et/ou **en ce que** le dispositif de réception (12) est associé à une zone de bordure supérieure d'une paroi latérale (5) et/ou à une zone de bordure supérieure de la paroi arrière (8) pour l'acheminement des envois (2) par une paroi latérale (5) et/ou par la paroi arrière (8).

3. Véhicule de livraison selon la revendication 1 ou 2,
**caractérisé en ce que** le dispositif de transport (13, 32) est conçu pour transporter, de préférence de manière progressive, les envois (2) d'une position de réception supérieure à une position de distribution inférieure et **en ce que**, de préférence, le dispositif de transport (13, 32) définit plusieurs plans de transport (19, 20, 33, 34) superposés, notamment reliés par des glissières ou des transporteurs à rouleaux.

4. Véhicule de livraison selon l'une des revendications 1 à 3,
**caractérisé en ce que** le dispositif de transport (13, 32), notamment sur chaque plan (21) du dispositif de transport (13, 32), comporte au moins une bande transporteuse, au moins un transporteur à plateaux basculants (20) et/ou au moins un transporteur à rouleaux (19, 34) présentant, de préférence, des galets omnidirectionnels (38) et/ou **en ce que** le dispositif de stockage (26, 36) est constitué, au moins partiellement, par le transporteur à rouleaux (19, 34) et/ou présente des plateaux basculants (28) pour la transmission des envois (2), stockés de manière provisoire, vers le dispositif de transport (13) et/ou **en ce que** les galets omnidirectionnels (38) sont agencés dans, de préférence, au moins trois orientations différentes et/ou **en ce que** les galets omnidirectionnels (38) sont entraînés dans différentes directions et/ou avec des vitesses périphériques différentes.

5. Véhicule de livraison selon l'une des revendications 1 à 4,
**caractérisé en ce que** le dispositif de transport (13, 32) et/ou le dispositif de stockage (26, 36) sont associés à au moins des moyens conducteurs utilisés pour distribuer les envois (2) depuis le dispositif de transport (13, 32) vers certaines positions de stockage (18, 35) du dispositif de stockage (26, 36) et/ou depuis certaines positions de stockage (18, 35) du dispositif de stockage (26, 36) vers le dispositif de transport (13, 32).

6. Véhicule de livraison selon l'une des revendications 1 à 5,
**caractérisé en ce que** l'on prévoit un dispositif de commande (16) pour commander le dispositif de transport (13, 32) afin de stocker les envois (2) dans certaines positions de stockage (18, 35) du dispositif de stockage (26, 36) et **en ce que**, de préférence, le dispositif de commande (16) est conçu pour stocker les envois (2), tour à tour, et/ou en fonction des informations de stockage saisies à l'aide d'au moins un dispositif capteur (14).

7. Véhicule de livraison selon l'une des revendications 1 à 6,
**caractérisé en ce qu'**au moins un dispositif de capteur (14) est relié à un dispositif de navigation (17) pour déterminer la tournée de distribution en fonction des informations de livraison des envois (2) et/ou **en ce que** l'on prévoit un dispositif de localisation pour transporter les envois (2) vers le dispositif de distribution (25) en fonction de la position du véhicule de livraison (1, 31) et des informations de livraison des envois (2).

8. Procédé pour la livraison d'envois (2) à différents endroits le long d'un itinéraire avec un véhicule de livraison (1, 31), de préférence selon l'une des revendications 1 à 7,
- dans lequel les envois (2) à livrer sont transmis, non triés, à travers au moins un dispositif de réception (12) du véhicule de livraison (1, 31), au véhicule de livraison (1,31),
- dans lequel les informations de livraison des envois (2) reçus sont saisies séparément par au moins un dispositif capteur (14),
- dans lequel les envois (2) sont transportés à partir d'au moins un dispositif de transport (13, 32) vers des positions de stockage (18, 35) d'au moins un dispositif de stockage (26, 36),
- dans lequel les envois (2) sont stockés, de manière provisoire, dans les positions de stockage (18, 35),
- dans lequel les envois (2) sont transportés depuis les positions de stockage (18, 35) par le dispositif de transport (13, 32) vers au moins un dispositif de distribution (25) et
- dans lequel les envois (2), transportés vers le dispositif de distribution (25), sont distribués à différents endroits de l'itinéraire.

9. Procédé selon la revendication 8,
dans lequel les informations de livraison et/ou les information de stockage prévues sur les envois (2), en particulier sous forme de code-barres 2D et/ou de code-barres 3D, sont saisies par un capteur (15), de préférence optique, d'un dispositif capteur (14) et sont sauvegardées associées aux envois (2) correspondants et/ou aux positions de stockage (18, 35) des envois (2) correspondants et/ou
- dans lequel l'itinéraire est déterminé à l'aide des informations de livraison et, de préférence, un dispositif de navigation (17) dirige le véhicule de livraison (1, 31) le long de l'itinéraire successivement vers les endroits de distribution des envois (2).

10. Procédé selon la revendication 8 ou 9,
- dans lequel au moins un dispositif de localisation, détermine la position actuelle du véhicule de livraison (1, 31) le long de l'itinéraire et
- dans lequel l'on détermine le prochain envoi (2) à distribuer en fonction de la position actuelle du véhicule de livraison (1, 31) et, de préférence, en fonction des positions de livraison déterminant l'itinéraire et/ou au moins une position de stockage (18, 35) d'au moins un prochain envoi (2) à distribuer.

11. Procédé selon l'une des revendications 8 à 10,
- dans lequel un prochain envoi (2) à distribuer est distribué à partir de la position de stockage (18, 35) vers au moins un dispositif de transport (13, 32) et
- dans lequel, de préférence, le dispositif de transport (13, 32) transporte au moins un prochain envoi (2) à distribuer vers le dispositif de distribution (25).

12. Procédé selon l'une des revendications 8 à 11,
dans lequel les envois (2) sont transmis, tour à tour, et/ou en fonction des informations de stockage associées aux envois (2), à des positions de stockage (18, 35) d'au moins un dispositif de stockage (26, 36).

13. Procédé selon l'une des revendications 8 à 12,
- dans lequel les envois (2) sont acheminés à travers une ouverture (9) dans le toit (7), dans la zone de bordure supérieure d'une paroi latérale (5) et/ou dans la zone de bordure supérieure de la paroi arrière (8) du dispositif de réception (12) et/ou
- dans lequel les envois (2) sont déversés, l'un après l'autre, par un dispositif de transport, en particulier une bande transporteuse (11) et/ou ensemble, sous la forme d'une série d'envois (2), dans le dispositif de réception (12) et/ou
- dans lequel les envois (2) sont séparés, au moins partiellement, notamment au moyen d'un dispositif de séparation (30), dans le dispositif de réception (12), puis acheminés séparément vers le dispositif capteur (14) pour la détermination des informations de livraison et/ou des informations de stockage.

14. Procédé selon l'une des revendications 8 à 13,
- dans lequel les envois (2) sont transportés par au moins un dispositif de transport (13, 32) sous la forme d'une bande transporteuse, d'un transporteur à plateaux basculants (20) et/ou d'un transporteur à rouleaux (19, 33, 34) présentant, de préférence, des galets omnidirectionnels (38), notamment à travers un plan (21), de préférence, différents plans (21), et
- dans lequel, de préférence, les envois (2) sont transportés par des glissières et/ou des transporteurs à rouleaux (19, 33) entre au moins deux plans (21), notamment adjacents.

15. Procédé selon la revendication 14,
- dans lequel les envois (2) sont transportés, l'un après l'autre, le long d'un plan (21) à l'aide d'un transporteur à rouleaux (34) présentant des galets omnidirectionnels (38) dans différentes directions, de préférence le long d'une trajectoire curviligne, et, de préférence, les galets omnidirectionnels (38) sont entraînés dans trois directions différentes et/ou à des vitesses différentes lors du transport des envois (2) et/ou
- dans lequel les envois (2) sont stockés, de manière provisoire, dans des positions de stockage (35), conçues en tant que partie du transporteur à rouleaux (34) présentant, de préférence, des galets omnidirectionnels (38).
